(19) Europäisches Patentamt / European Patent Office / Office européen des brevets

(11) **EP 2 928 925 B1**

(12) **EUROPEAN PATENT SPECIFICATION**

(45) Date of publication and mention of the grant of the patent:
**27.06.2018 Bulletin 2018/26**

(21) Application number: **13786762.8**

(22) Date of filing: **17.10.2013**

(51) Int Cl.:
***C08B 1/00*** *(2006.01)* ***C08B 1/08*** *(2006.01)*
***C08B 11/08*** *(2006.01)*

(86) International application number:
**PCT/JP2013/078749**

(87) International publication number:
**WO 2014/087755 (12.06.2014 Gazette 2014/24)**

(54) **PROCESS FOR PRODUCING HYDROXYALKYL CELLULOSES**

VERFAHREN ZUR HERSTELLUNG VON HYDROXYALKYLCELLULOSE

PROCESSUS DE PRODUCTION HYDROXYALKYLECELLULOSE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.12.2012 JP 2012267030**

(43) Date of publication of application:
**14.10.2015 Bulletin 2015/42**

(73) Proprietor: **Kao Corporation**
**Chuo-Ku**
**Tokyo 103-8210 (JP)**

(72) Inventors:
- **GOTO, Hideki**
  **Wakayama-shi**
  **Wakayama 640-8580 (JP)**
- **NAKANISHI, Kohei**
  **Wakayama-shi**
  **Wakayama 640-8580 (JP)**
- **IMORI, Yoichiro**
  **Wakayama-shi**
  **Wakayama 640-8580 (JP)**
- **WADA, Tomoya**
  **Wakayama-shi**
  **Wakayama 640-8580 (JP)**

(74) Representative: **Hoffmann Eitle**
**Patent- und Rechtsanwälte PartmbB**
**Arabellastraße 30**
**81925 München (DE)**

(56) References cited:
**EP-A1- 1 589 035** **EP-A2- 1 279 680**
**WO-A1-2006/062268** **JP-A- 2000 186 101**
**US-A- 4 084 060**

- **SARAH KÃ ÂHLER ET AL: "Interactions of ionic liquids with polysaccharides 9. Hydroxyalkylation of cellulose without additional inorganic bases", CELLULOSE, KLUWER ACADEMIC PUBLISHERS (DORDRECHT), NL, vol. 17, no. 2, 22 November 2009 (2009-11-22), pages 437-448, XP019787847, ISSN: 1572-882X**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 928 925 B1

## Description

Field of the Invention

The present invention relates to a process for producing hydroxyalkyl celluloses, hydroxyalkyl celluloses produced by the process, and a process for producing cationized hydroxyalkyl celluloses using the hydroxyalkyl celluloses.

Background of the Invention

Hydroxyalkyl celluloses have been used in a variety of applications including components to be compounded in cleaning agent compositions such as shampoos, rinses, treatments and conditioners, dispersants, modifiers, aggregating agents, etc. In these applications, products have been frequently required to have a good transparency, and it has been therefore required that the hydroxyalkyl celluloses used therein have an excellent water-solubility.

Celluloses as a raw material for production of the hydroxyalkyl celluloses have a high crystallinity and a poor reactivity. Thus, it is necessary to reduce a crystallinity of the celluloses and improve a reactivity thereof.

In general, the hydroxyalkyl celluloses have been produced by the method of subjecting a cellulose to activation treatments such as so-called Alcell process or mercerization in which the cellulose is mixed with a large amount of water and a largely excessive amount of an alkali metal hydroxide in a slurry condition to produce an alkali cellulose, and then allowing the resulting alkali cellulose to react with an alkyleneoxide.

However, in the above method, since a large amount of a salt is by-produced owing to a largely excessive amount of the alkali metal hydroxide used in the Alcell process, there tends to occur such a problem that a large burden is imposed on purification for removing the by-produced salt. In consequence, there have been proposed methods for production of an alkali cellulose or a cellulose derivative for the purpose of enhancing a productivity thereof, etc.

For example, JP38-4800B discloses the method of continuously producing an alkali cellulose suitable for producing a cellulose derivative in which a cellulose in the form of a fine powder having a size of 60 mesh or less and an aqueous caustic alkali solution having a concentration of 30% or more are mixed with each other while being sprayed.

JP 2002-114801A discloses the method of producing a polysaccharide derivative in which a cellulose ether in the form of not a slurry but a powder is subjected to reaction for enhancing a productivity and a reaction efficiency.

JP 2009-143997A discloses the method of producing a hydroxypropyl cellulose in which a low-crystalline cellulose powder is reacted with propyleneoxide in the presence of a catalyst.

JP 1-502675A discloses the method of producing a cellulose ether which includes a first step of reacting a cellulose with an alkali metal hydroxide and an etherifying agent in the presence of a boronic compound to obtain an intermediate reaction product containing a cellulose ether, and a second step of further reacting the thus obtained intermediate reaction product with the alkali metal hydroxide and the etherifying agent.

JP 2009-522394A discloses the method of producing a hydroxyalkyl alkyl cellulose which includes a step of subjecting a cellulose, a specific amount of an alkali metal hydroxide, a specific amount of an alkyleneoxide, and an alkyl halide that is added in an amount of from 20 to 95% by weight of a total amount of the alkali halide to be added during the method, to a primary reaction, and a step of subjecting the thus obtained primary reaction product, a specific amount of the alkali metal hydroxide and a remaining amount of the alkali halide to a secondary reaction.

EP 1 589 035 A1 relates to the industrial preparation of methylhydroxyalkyl cellulose (I), from cellulose present in alkali with chloromethane and hydroxyalkyl composition, comprising (A) spraying the cellulose with aqueous alkali hydroxide solution and a suspension containing 20-50 wt.% of chloromethane into an autoclave so that the alkalized cellulose reacts with the chloromethane; (B) optionally adding one or more hydroxyalkyl solution at above 60°C; (C) adding alkali hydroxide with greater stoichiometric value of at least +0.1 related to the chloromethane added in the step (a); (D) optionally adding one or more hydroxyalkyl solution at temperature higher than 60°C and reacting for at least 20 minutes; (E) adding chloromethane with greater stoichiometric value of at least +0.2, related to the alkali hydroxide used in steps (a and c); (F) optionally adding further alkali hydroxide and reacting at 60-110°C; and (G) distilling the suspension with the remaining chloromethane and isolating, washing and drying the obtained product.

US 4,084 060 A relates to a process for the synthesis of hydroxyethyl cellulose by employment of a controlled, optimum amount of available water for swelling the cellulose in aqueous caustic reaction medium in hydroxy ethoxylation sequences of first high and then low ratios of caustic:cellulose.

EP 1 279 680 A2 relates to a process for preparation of alkylhydroxyalkyl cellulose by: (a) alkalization of cellulose with alkali hydroxide 1/AGU (sic) (0.9 - 2.9 equivalents) as aqueous lye, in the presence of a suspension agent containing alkyl halide (>= 0.2 equivalents/AGU); (b) reaction of the alkalized cellulose with alkylation and hydroxyalkylation agents at 65 degrees C; (c) addition of further alkali hydroxide as aqueous lye; (d) metering in of alkylation agent in amount at least equal to the difference between the already used equivalents of alkylation agent 1/AGU and the total amount of metered in equivalent of alkali hydroxide/AGU, with no metering in when the amount of equivalent alkylation agent 1/AGU already exceeds the total amount of alkali hydroxide/AGU metered in; and (e) isolation of the alkylhydroxycellulose

obtained from the reaction mixture and purification if required.

WO 2006/062268 A1 relates to a process of preparing hydroxyalkyl cellulose derivatives by reacting cellulose and ethylene oxide in the presence of alkali metal hydroxide, wherein the reaction between cellulose and ethylene oxide is performed in the presence of isopropyl alcohol azeotropic solvent in a horizontally agitated reactor, wherein the ethylene oxide is supplied via two steps, thus resulting in a two-step reaction, and the amount of alkali metal hydroxide remaining after the first reaction is controlled.

JP 2000 186101 A relates to a method for producing a hydroxypropyl cellulose comprising treating a cellulose with an aqueous solution of an alkali, with propylene oxide, 20-80% of the whole addition amount of propylene oxide being added in the presence of 100-700 parts by weight of a hydrophilic organic solvent based on 100 parts by weight of the cellulose, carrying out an etherification reaction and neutralizing 20-90% of the alkali amount in the alkali cellulose. Successively 80-20% of the whole addition amount of propylene oxide is added to perform an etherification reaction.

Cellulose (2010) 17:437-448 relates to the preparation of water-soluble hydroxyalkyl cellulose with a molar degree of substitution of up to 2.79 under completely homogeneous reaction conditions in various ionic liquids without addition of inorganic bases.

## Summary of the Invention

The present invention relates to a process for producing a hydroxyalkyl cellulose by adding a basic compound and an alkyleneoxide to a cellulose to conduct a reaction therebetween in which the basic compound is added in a total amount of not less than 0.7 mol and not more than 1.5 mol per 1 mol of an anhydroglucose unit in the cellulose, and the alkyleneoxide is added in a total amount of not less than 1.0 mol and not more than 3.0 mol per 1 mol of an anhydroglucose unit in the cellulose, the process including the following steps 1 and 2:

Step 1: adding the basic compound in an amount of not less than 50% and not more than 95% of the total amount of the basic compound to be added during the process, and then adding the alkyleneoxide in an amount of not less than 30% and not more than 80% of the total amount of the alkyleneoxide to be added during the process to react the compounds with the cellulose, thereby obtaining a reaction mixture; and
Step 2: adding a remaining amount of the basic compound not added in the step 1 and a remaining amount of the alkyleneoxide not added in the step 1 to the reaction mixture obtained in the step 1 to conduct a reaction therebetween.

## Detailed Description of the Invention

According to the studies made by the present inventors, the cellulose derivative obtained by the method described in JP38-4800B is insufficient in uniformity, and therefore is likely to form water-insoluble coarse particles. In particular, when the alkali is not used in an excessive amount based on an anhydroglucose unit constituting the cellulose, the above tendency has been become apparently more remarkable.

Also, the methods described in JP 2002-114801A and JP 2009-143997A have failed to attain a satisfactory reaction selectivity, and the resulting hydroxyalkyl celluloses must be still improved in water-solubility.

The present invention relates to a process for producing a hydroxyalkyl cellulose having an excellent water-solubility from a cellulose while maintaining a high reaction selectivity; a hydroxyalkyl cellulose produced by the process; and a process for producing a cationized hydroxyalkyl cellulose using the resulting hydroxyalkyl cellulose.

The present inventors have found that when using a split addition method in which an activated cellulose obtained using a small amount of a basic compound by the conventionally known method is subjected to addition reaction with an alkyleneoxide, and then the resulting reaction product is reacted again with a remaining amount of the basic compound and a remaining amount of the alkyleneoxide, it is possible to produce a hydroxyalkyl cellulose having an excellent water-solubility while maintaining a high reaction selectivity and further produce a cationized hydroxyalkyl cellulose.

That is, the present invention relates to the following aspects (1) and (2).

(1) A process for producing a hydroxyalkyl cellulose by adding a basic compound and an alkyleneoxide to a cellulose to conduct a reaction therebetween in which the basic compound is added in a total amount of not less than 0.7 mol and not more than 1.5 mol per 1 mol of an anhydroglucose unit in the cellulose, and the alkyleneoxide is added in a total amount of not less than 1.0 mol and not more than 3.0 mol per 1 mol of the anhydroglucose unit in the cellulose, the process including the following steps 1 and 2:

Step 1: adding the basic compound in an amount of not less than 50% and not more than 95% of the total amount of the basic compound to be added during the process, and then adding the alkyleneoxide in an amount of not less than 30% and not more than 80% of the total amount of the alkyleneoxide to be added during the

process to react the compounds with the cellulose, thereby obtaining a reaction mixture; and

Step 2: adding a remaining amount of the basic compound not added in the step 1 and a remaining amount of the alkyleneoxide not added in the step 1 to the reaction mixture obtained in the step 1 to conduct a reaction therebetween.

(2) A process for producing a cationized hydroxyalkyl cellulose including the step of producing a hydroxyalkyl cellulose produced by the above process (1), and a step of reacting the hydroxyalkyl cellulose with a cationizing agent represented by the following general formula (1) or (2):

General formula (1):

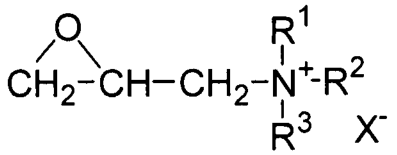

General formula (2):

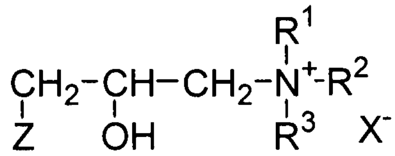

wherein $R^1$ to $R^3$ are each independently a linear or branched hydrocarbon group having 1 to 4 carbon atoms; and X and Z represent the same halogen atom or different halogen atoms.

According to the present invention, there are provided a process for producing a hydroxyalkyl cellulose having an excellent water-solubility while maintaining a high reaction selectivity, a hydroxyalkyl cellulose produced by the process, and a process for producing a cationized hydroxyalkyl cellulose using the resulting hydroxyalkyl cellulose.

[Process for Producing Hydroxyalkyl Cellulose]

The production process of the present invention including the steps 1 and 2 can exhibit such an effect that the resulting hydroxyalkyl cellulose has an excellent water-solubility while maintaining a high reaction selectivity. The reason why the above effect can be attained by the present invention is considered as follows although not clearly determined.

In the production of the hydroxyalkyl cellulose, when a whole amount of the basic compound is added at one time, the basic compound tends to be localized in an amorphous moiety of the cellulose so that the alkyleneoxide tends to be reacted therewith non-uniformly. However, in the split addition used in the process of the present invention, in the step 1, after adding a specific amount of the basic compound, a specific amount of the alkyleneoxide is added and reacted, so that the cellulose in the reaction mixture obtained after the reaction of the step 1 contains an increased amount of the amorphous moiety. For this reason, in the reaction of the step 2, the basic compound is relatively prevented from being localized, so that the alkyleneoxide can be uniformly reacted therewith. As a result, it is considered that the resulting hydroxyalkyl cellulose is improved in water-solubility.

In the following, the respective components, the step 1 and the step 2 used in the present invention are described.

<Cellulose>

The crystallinity of the cellulose used in the present invention (hereinafter occasionally referred to merely as a "cellulose raw material") is not particularly limited. According to the process of the present invention, a degree of reduction in molecular weight of the hydroxyalkyl cellulose upon production thereof is small. Therefore, the production process of the present invention aims to produce, in particular, a hydroxyalkyl cellulose having a high degree of polymerization, and can therefore exhibit its effects more remarkably when a cellulose having a high degree of polymerization is used as a raw material. In general, the treatment for reducing a crystallinity (decrystallization) of the cellulose is accompanied with reduction in degree of polymerization of the cellulose owing to cutting of cellulose chains. For this reason, it is difficult to obtain a cellulose having a low crystallinity and a high degree of polymerization. On the contrary, it is also difficult to obtain a cellulose having an extremely high crystallinity such as those having a crystallinity of more than 95%. Accordingly, from the viewpoints of a high degree of polymerization and a good availability, the crystallinity of the cellulose raw material is preferably from 10 to 95%, more preferably from 30 to 90% and still more preferably from 60 to 80%.

In the present invention, the term "crystallinity" of the cellulose as used herein means a crystallinity derived from an I-type crystal structure of the cellulose raw material, and is determined from the results of X-ray crystal diffraction spectrum analysis according to the following calculation formula (1):

$$\text{Crystallinity (\%)} = [(I_{22.6} - I_{18.5})/I_{22.6}] \times 100 \qquad (1)$$

wherein $I_{22.6}$ is a diffraction intensity of a lattice plane (002 plane) of cellulose I-type crystals as measured at a diffraction angle 2θ of 22.6° in X-ray diffraction analysis; and $I_{18.5}$ is a diffraction intensity of an amorphous moiety as measured at a diffraction angle 2θ of 18.5° in X-ray diffraction analysis.

Commercially available pulps or powdery celluloses also contain an amorphous moiety in a small amount, and the crystallinity thereof as calculated from the above formula (1) generally lies within the range of from 60 to 80%.

The degree of polymerization of the cellulose raw material is expressed by a viscosity-average degree of polymerization calculated from the results of measurement for a viscosity of the cellulose raw material by a copper-ammonia method. More specifically, the viscosity-average degree of polymerization of the cellulose raw material is calculated by the method described in Examples below. The viscosity-average degree of polymerization of the cellulose raw material is not particularly limited, and is preferably 100 or more because the hydroxyalkyl cellulose produced by the process of the present invention can exhibit a high conditioning performance when used as a component to be compounded in cleaning agent compositions. The viscosity-average degree of polymerization of the cellulose raw material is more preferably 200 or more, still more preferably 500 or more and further still more preferably 1000 or more, and also from the viewpoint of a good availability, is preferably 3000 or less, more preferably 2500 or less, still more preferably 2200 or less and further still more preferably 2000 or less. From these viewpoints, the viscosity-average degree of polymerization of the cellulose raw material is preferably from 100 to 3000, more preferably from 200 to 2500, still more preferably from 500 to 2200 and further still more preferably from 1000 to 2000.

The kind and shape of the cellulose raw material are not particularly limited unless they have any adverse influence on introduction of the cellulose raw material into a production apparatus. Examples of the cellulose raw material include timbers such as various wood chips, prunings, thinnings and branches of various trees, building wastes and factory wastes; pulps such as wood pulps obtained from wood and cotton linter pulps obtained from fibers around cotton seeds; papers such as newspapers, corrugated boards, magazines and wood-free papers; stems and leaves of plants such as rice straws and corn stems; and shells of plants such as chaffs, palm shells and coconut shells. The cellulose raw material may be used in the form of pellet-like or chip-like pulps obtained by cutting or coarsely milling pulps or timbers, or a powdery cellulose obtained by finely milling the pulps or timbers.

(Decrystallization of Cellulose)

The cellulose raw material is preferably subjected to mechanical decrystallization prior to the reaction of the step 1.

Examples of the apparatus for the mechanical decrystallization include tank-drive media mills, such as a tumbling ball mill, a vibration ball mill, a vibration rod mill, a vibration tube mill, a planetary ball mill and a centrifugal fluid mill; and media agitating mills, such as a continuous flow tank mill and an annular mill. Of these apparatuses, in view of efficient reduction in the crystallinity and productivity, preferred are tank-drive media mills, and more preferred are vibration mills such as a vibration ball mill, a vibration rod mill and a vibration tube mill.

The mechanical decrystallization treatment may be conducted in either batchwise or continuous manner.

The material of the apparatus and/or media for the mechanical decrystallization is not particularly limited, and selected from, for example, iron, stainless steel, alumina, zirconia, silicone carbide, silicone nitride, and glass, with iron, stainless steel, zirconia, silicone carbide, and silicone nitride being preferred in view of efficient reduction in the crystallinity, and iron and stainless steel being more preferred in view of industrial use.

If a vibration mill with rod media is used, the outer diameter of rods is preferably from 0.1 to 100 mm and more preferably from 0.5 to 50 mm in view of efficient reduction in the crystallinity. If the size of rods is within the above range, the crystallinity is efficiently reduced to obtain a desired crystallinity, and the cellulose is free from contamination owing to inclusion of broken pieces of the rods.

The preferred filling rate of rod media varies depending upon the type of vibration mill and is preferably from 10 to 97% and more preferably from 15 to 95%. When the filling rate of the rod media is within the above ranges, the contact between the cellulose and the rod media is increased and the movement of media is not disturbed to increase the milling efficiency. The filling rate referred to herein is a ratio of the apparent volume of rod media to the volume of milling tank of the vibration mill.

The temperature for conducting the mechanical decrystallization is not particularly limited as long as it does not exceed the decomposition temperature of the cellulose, and industrially preferably from -20 to 200 °C, and more preferably from -10 to 150 °C in view of the water-solubility of the hydroxyalkyl cellulose produced by the process of the present invention. If the temperature is raised by the heat evolved by the treatment to exceed the predetermined temperature, the cooling operation may be used.

The treating time for the mechanical decrystallization is usually from 0.01 to 20 h, more preferably from 0.05 to 10 h, and still more preferably from 0.1 to 5 h in view of the decrystallization efficiency and productivity.

In view of effectively reducing the crystallinity and preventing reduction in degree of polymerization of the cellulose raw material, the water content in the system during the mechanical decrystallization is preferably regulated

within a range of 10% by mass or less, more preferably 5% by mass or less, and still more preferably 2% by mass or less, each based on the remaining mass obtained by subtracting the amount of water from the amount of the cellulose raw material. The lower limit of the water content in the system during the mechanical decrystallization is 0% by mass based on the remaining mass obtained by subtracting the amount of water from the amount of the cellulose raw material. However, since it is difficult to adjust the water content to 0% by mass because of a high load exerted upon the operation, the lower limit of the water content in the system during the mechanical decrystallization is 0.01% by mass or more, more preferably 0.05% by mass or more, and still more preferably 0.1% by mass or more based on the remaining mass obtained by subtracting the amount of water from the amount of the cellulose raw material. The water content in the reactor may be controlled by any known method, for example, water-addition or dehydration while heating under reduced pressure.

Upon the mechanical decrystallization, the cellulose raw material is milled more finely simultaneously with progress of the decrystallization. Therefore, the cellulose raw material obtained after completion of the mechanical decrystallization is in the form of a finely milled cellulose.

The median size of the finely milled cellulose is preferably from 10 to 1000 μm, more preferably from 20 to 500 μm and still more preferably from 30 to 200 μm from the viewpoints of a good uniformity of reaction with the basic compound and a high productivity.

The decrystallization is preferably carried out until the crystallinity of the cellulose raw material is reduced in the range of not less than 10% and not more than 50%.

The crystallinity of the cellulose raw material after subjected to the decrystallization is preferably 50% or less, more preferably 40% or less and still more preferably 30% or less from the viewpoint of enhancing a reactivity of the cellulose raw material after milled, and is also preferably 10% or more, more preferably 12% or more and still more preferably 15% or more from the viewpoints of suppressing reduction in degree of polymerization of the cellulose raw material and enhancing a reactivity thereof to produce an alkali cellulose having a high degree of polymerization with a high yield. In the total consideration of these viewpoints, the crystallinity of the cellulose raw material after subjected to the decrystallization is preferably from 10 to 50%, more preferably from 12 to 40% and still more preferably from 15 to 30%.

<Basic Compound>

Examples of the basic compound to be used in the present invention include alkali metal hydroxides, such as sodium hydroxide, potassium hydroxide, and lithium hydroxide; alkaline earth metal hydroxides, such as magnesium hydroxide and calcium hydroxide; and tertiary amines, such as the group consisting of the alkali metal hydroxides and the alkaline earth metal hydroxides being preferred, the alkali metal hydroxides being more preferred, and at least one compound selected from the group consisting of sodium hydroxide and potassium hydroxide being most preferred from the view of profitability and a good availability.

These basic compounds may be used alone or in combination of any two or more thereof.

The total amount of the basic compound added is 0.7 mol or more per 1 mol of an anhydroglucose unit constituting the cellulose (hereinafter occasionally referred to merely as "AGU") from the viewpoint of a good water-solubility of the resulting hydroxyalkyl cellulose.

On the other hand, when the basic compound is used in an excessive amount on the basis of AGU in the cellulose, the amount of a by-product salt derived from basic compound upon the reaction with alkyleneoxide is increased, so that the yield of the aimed product (based on the alkyleneoxide) is lowered. From the viewpoints of suppressing production of the by-product salt and enhancing the yield of the aimed product, namely, enhancing a reaction selectivity (based on the alkyleneoxide), the total amount of the basic compound added is not less than 0.7 mol and not more than 1.5 mol per 1 mol of AGU in the cellulose.

Meanwhile, the total amount of the basic compound added as used in the present invention means a sum of an amount of the basic compound added in the step 1 and an amount of the basic compound added in the step 2.

From the above viewpoints, the total amount of the basic compound added per 1 mol of AGU is preferably 0.8 mol or more, and more preferably 0.9 mol or more, and the upper limit of the total amount of the basic compound added per 1 mol of AGU is preferably 1.4 mol or less, more preferably 1.3 mol or less, still more preferably 1.2 mol or less, and further still more preferably 1.1 mol or less. More specifically, from the above viewpoints, the total amount of the basic compound added per 1 mol of AGU is from 0.7 to 1.5 mol, preferably from 0.7 to 1.4 mol, more preferably from 0.7 to 1.3 mol, still more preferably from 0.7 to 1.2 mol, further still more preferably from 0.7 to 1.2 mol, further still more preferably from 0.8 to 1.1 mol, and further still more preferably from 0.9 to 1.1 mol.

<Alkyleneoxide>

Examples of the alkyleneoxide used in the present invention include ethyleneoxide, propyleneoxide, glycidol, butyleneoxide, 1,2-epoxy hexane, 1,2-epoxy octane, 1,2-epoxy decane, 1,2-epoxy dodecane and 1,2-epoxy octadecane.

Among these alkyleneoxides, from the viewpoints of a high reaction selectivity and a good water-solubility of the obtained hydroxyalkyl cellulose, preferred are alkyleneoxides having 2 to 6 carbon atoms, more preferred are alkyleneoxides having 2 to 4 carbon atoms, still more preferred are one or more alkyleneoxides selected from the group consisting of ethyleneoxide, propyleneoxide and butyleneoxide, further still more preferred are ethyleneoxide and propyleneoxide, and most preferred is propyleneoxide.

The total amount of the alkyleneoxide added may be appropriately adjusted according to a desired amount of an alkyleneoxy group to be introduced, and is not less than 1.0 mol and not more than 3.0 mol per 1 mol of AGU constituting the cellulose from the viewpoints of a high reaction selectivity and a good water-solubility of the resulting hydroxyalkyl cellulose.

From the viewpoints of a good water-solubility of the resulting hydroxyalkyl cellulose, the total amount of the alkyleneoxide added per 1 mol of AGU is preferably 1.2 mol or more, more preferably 1.4 mol or more, still more preferably 1.6 mol or more and further still more preferably 1.8 mol or more. From the viewpoints of profitability and improving detergent performance of a cationized hydroxyalkyl cellulose of the present invention used as a hair or skin cosmetic composition, the upper limit of the total amount of the alkyleneoxide added per 1 mol of AGU is preferably 2.8 mol or less, more preferably 2.5 mol or less and still more preferably 2.3 mol or less. More specifically, from these viewpoints, the amount of the alkyleneoxide added per 1 mol of AGU is from 1.0 to 3.0 mol, preferably 1.2 to 2.8 mol, more preferably from 1.4 to 2.5 mol, still more preferably from 1.6 to 2.5 mol, further still more preferably from 1.8 to 2.5 mol, and further still more preferably from 1.8 to 2.3 mol. From the viewpoints of a high reaction selectivity and a good water-solubility of the resulting hydroxyalkyl cellulose, the amount of the alkyleneoxide added per 1 mol of AGU is from 1.0 to 3.0 mol, preferably 1.2 to 3.0 mol, more preferably from 1.4 to 3.0 mol, still more preferably from 1.6 to 3.0 mol, further still more preferably from 1.8 to 3.0 mol.

Meanwhile, the total amount of the alkyleneoxide added as used in the present invention means a sum of an amount of the alkyleneoxide added in the step 1 and an amount of the alkyleneoxide added in the step 2.

<Production of Hydroxyalkyl Cellulose>

In the process of the present invention, the basic compound is added in an amount of not less than 0.7 mol and not more than 1.5 mol per 1 mol of an anhydroglucose unit in the cellulose, and the alkyleneoxide is added in an amount of not less than 1.0 mol and not more than 3.0 mol per 1 mol of an anhydroglucose unit in the cellulose, to react both the compounds with the cellulose. In the reaction of the process, the following two steps are conducted.

Step 1: adding the basic compound in an amount of not less than 50% and not more than 95% of the total amount of the basic compound to be added during not more than 95% of the total amount of the basic compound to be added during the process, and then adding the alkyleneoxide in an amount of not less than 30% and not more than 80% of the total amount of the alkyleneoxide to be added during the process to react the compounds with the cellulose, thereby obtaining a reaction mixture; and

Step 2: adding a remaining amount of the basic compound not added in the step 1 and a remaining amount of the alkyleneoxide not added in the step 1 to the reaction mixture obtained in the step 1 to conduct a reaction therebetween.

Meanwhile, in the step 2, the remaining amount of the basic compound and the remaining amount of the alkyleneoxide may be further divided or split into several portions and added in multi-stages unless the effects of the present invention are adversely affected.

(Step 1)

[Addition of Basic Compound]

In the step 1, the basic compound is added in an amount of not less than 50% and not more than 95% of the total amount of the basic compound to be added during the process. From the viewpoints of a high reaction selectivity and a good water-solubility of the resulting hydroxyalkyl cellulose, the amount of the basic compound added in the step 1 is not less than 50%, preferably not less than 52%, more preferably not less than 55%, still more preferably not less than 58% and further still more preferably not less than 60% of the total amount of the basic compound to be added during the process, and the upper limit of the amount of the basic compound added in the step 1 is not more than 95%, preferably not more than 90%, more preferably not more than 85% and still more preferably not more than 80% of the total amount of the basic compound to be added during the process. More specifically, from the above viewpoints, the amount of the basic compound added in the step 1 is from 50 to 95%, preferably from 52 to 95%, more preferably from 55 to 90%, still more preferably from 58 to 85% and further still more preferably from 60 to 80% of the total amount of the basic compound to be added during the process.

The form of the basic compound when added is not particularly limited. From the viewpoints of uniformly dispersing the basic compound in the cellulose raw material and uniformly producing the alkali cellulose, the solid basic

compound is preferably added in the form of a powder obtained by milling, etc., or in the form of an aqueous solution prepared by dissolving the basic compound in water. The liquid basic compound may be used as such or in the form of a dilute solution in water. From the viewpoint of well controlling a water content in the system as described hereinafter, the basic compound is preferably used in the form of an aqueous solution or a dilute solution prepared by dissolving or diluting the basic compound in water. The concentration of the basic compound in the aqueous solution or dilute solution is preferably 10% or more, more preferably 15% or more, still more preferably 20% or more, and is also preferably 35% or less, more preferably 30% or less and still more preferably 25% or less.

The manner for adding the basic compound is not particularly limited and the basic compound may be added all at once, in several split portions, continuously, or in combination thereof. When the basic compound is added all at once, in order to uniformly disperse the basic compound in the cellulose raw material, it is preferred that the basic compound or an aqueous solution of the basic compound is added to the cellulose raw material, and then the resulting mixture is mixed while stirring, or the basic compound or an aqueous solution of the basic compound is added to the cellulose raw material while stirring the cellulose raw material.

From the viewpoint of efficiently dispersing the basic compound in the mixture, the basic compound is preferably added continuously or in several split portions while stirring the mixture.

The apparatus for the stirring and mixing is not particularly limited as long as it is capable of dispersing the basic compound in the cellulose. Examples of such an apparatus include mixing devices such as a ribbon-type mixer, a paddle-type mixer, a conical planetary screw-type mixer and a kneader used for kneading a powder, a highly-viscous substance, a resin, etc. Among these apparatuses, preferred is a horizontal axis paddle-type mixer. More specifically, there are preferably used, in particular, a loedige mixer in the form of a horizontal axis paddle-type mixer having a chopper blade (a mixer equipped with a special plow shovel which is fittable with the chopper blade) and a Ploughshare mixer (a mixer having two functions including floating diffusion mixing by a shovel blade with a peculiar shape and high-speed shearing dispersion by a multi-stage chopper blade).

[Adjustment of Water Content]

In the step 1, the water content in the system is preferably adjusted upon or after adding the basic compound to the cellulose raw material. The adjustment of the water content in the system allows production of the alkali cellulose from the cellulose and the basic compound to efficiently proceed, so that the alkyleneoxide can be promoted addition reaction with the alkali cellulose in an efficient manner.

From the viewpoint of increasing a rate of production of the alkali cellulose, the water content in the system of the step 1 is preferably not less than 20% by mass, more preferably not less than 25% by mass, still more preferably not less than 30% by mass and further still more preferably not less than 40% by mass on the basis of the remaining mass obtained by subtracting the amount of water from the amount of the cellulose raw material used therein.

On the other hand, from the viewpoint of a high yield of addition reaction of the alkyleneoxide (on the basis of the alkyleneoxide), the water content in the system in the step 1 is preferably not more than 90% by mass, more preferably not more than 80% by mass, still more preferably not more than 70% by mass and further still more preferably not more than 60% by mass on the basis of the remaining mass obtained by subtracting the amount of water from the amount of the cellulose raw material used therein.

In the case where the water content is adjusted by adding water to the system, the order of addition of the basic compound and water is not particularly limited, and there may be used (i) the method of adding water after completion of addition of the basic compound, (ii) the method of adding the basic compound and water at the same time, or (iii) the method of adding the basic compound in the form of an aqueous solution prepared by dissolving the basic compound in a part or whole of water. Among these methods, from the viewpoint of facilitated operation of the production process, the method (iii) is preferred.

The method of addition of water is also not particularly limited, and water may be added all at once or in several split portions (dropwise addition). From the viewpoint of uniformly dispersing water in the system, water added all at once is preferably sprayed. Also, from the same viewpoints, there are preferably used (1) the method of adding water in the cellulose raw material or in a mixture of the cellulose raw material and the basic compound, followed by mixing the resulting mixture while stirring, (2) the method of adding and mixing water while stirring the cellulose raw material or a mixture of the cellulose raw material and the basic compound, (3) the method of adding an aqueous solution prepared by dissolving the basic compound in water to the cellulose, followed by mixing the resulting mixture while stirring, or (4) the method of adding water in the form of an aqueous solution of the basic compound while stirring the cellulose.

The apparatus used for the stirring and mixing is not particularly limited as long as it is capable of mixing a mixture of water and the cellulose raw material or a mixture of water, the cellulose raw material and the basic compound. More specifically, such apparatuses as described above for stirring and mixing the basic compound may also be used in the above stirring and mixing.

[Aging]

In the case where the basic compound and water are added to the cellulose raw material in the step 1, the resulting mixture is preferably subsequently aged because a sufficient amount of the alkali cellulose can be produced before the below-mentioned addition reaction with the alkyleneoxide. The aging used herein means that the resulting reaction product is held in a predetermined temperature range over a predetermined period of time with or without stirring.
From the viewpoint of attaining a high production rate of the alkali cellulose and maintaining a degree of polymerization thereof, the temperature upon the aging is preferably 35°C or higher, more preferably 38°C or higher, still more preferably 40°C or higher, and further still more preferably 50°C or higher, and is also preferably 90°C or lower, more preferably 80°C or lower, and still more preferably 75°C or lower. More specifically, the aging temperature is preferably from 35 to 90°C, more preferably from 38 to 80°C, still more preferably from 40 to 75°C and further still more preferably from 50 to 75°C.
The apparatus used for the aging is not particularly limited. More specifically, such apparatuses as described above for stirring and mixing the basic compound may also be used in the aging. From the viewpoint of simplicity and convenience of the aging operation, it is preferred that the aging is carried out in the same apparatus as used above for stirring and mixing the mixture obtained by adding the basic compound, if required, together with room temperature. Therefore, the aging time is preferably 0.1 h or longer, more preferably 0.2 h or longer, still more preferably 0.5 h or longer, and further still more preferably 1 h or longer, and is also preferably 24 h or shorter, more preferably 12 h or shorter, still more preferably 6 h or shorter, and further still more preferably 4 h or shorter. More specifically, the aging time is preferably from 0.1 to 24 h, more preferably from 0.2 to 12 h, still more preferably from 0.5 to 6 h, and further still more preferably from 1 to 4 h.
The addition of the basic compound, the addition of water, and the aging may be carried out in an inert gas atmosphere such as nitrogen, if required, from the viewpoints of avoiding coloration of the alkali cellulose produced and preventing reduction in degree of polymerization of the cellulose raw material and the alkali cellulose produced.

[Addition of Alkyleneoxide]

The alkyleneoxide is added in a total amount of not less than 1.0 mol and not more than 3.0 mol per 1 mol of an anhydroglucose unit in the cellulose. The amount of the alkyleneoxide added in the step 1 is not less than 30% and not more than 80% of the total amount of the alkyleneoxide to be added during the process of the present invention. From the viewpoints of a high reaction selectivity and a good water-solubility of the resulting hydroxyalkyl cellulose, the amount of the alkyleneoxide added in the step 1 is not less than 30%, preferably not less than 35%, more preferably not less than 40%, still more preferably not less than 45% and further still more preferably not less than 49% of the total amount of the alkyleneoxide to be added during the process of the present invention. From the viewpoint of a good water-solubility of the hydroxyalkyl cellulose produced by the process of the present invention, the upper limit of the amount of the alkyleneoxide added in the step 1 is not more than 80%, preferably not more than 78%, more preferably not more than 76%, still more preferably not more than 74% and further still more preferably not present invention. From the viewpoint of a good water-solubility of the hydroxyalkyl cellulose produced by the process of the present invention, the upper limit of the amount of the alkyleneoxide added in the step 1 is not more than 80%, preferably not more than 78%, more preferably not more than 76%, still more preferably not more than 74% and further still more preferably not more than 70% of the total amount of the alkyleneoxide to be added during the process of the present invention. From the above viewpoints, more specifically, the amount of the alkyleneoxide added in the step 1 is from 30 to 80%, preferably from 35 to 78%, more preferably from 40 to 76%, still more preferably from 45 to 74% and further still more preferably from 49 to 70% of the total amount of the alkyleneoxide to be added during the process of the present invention.
From the viewpoint of a good water-solubility of the hydroxyalkyl cellulose produced by the process of the present invention, the molar ratio of the amount of the alkyleneoxide added (number of moles of the alkyleneoxide per 1 mol of an anhydroglucose unit in the cellulose) to the amount of the basic compound added (number of moles of the basic compound per 1 mol of an anhydroglucose unit in the cellulose) is preferably 0.9 or more, more preferably 1.1 or more, still more preferably 1.5 or more, and further still more preferably 1.6 or more. From the same viewpoint, the molar ratio of the amount of the alkyleneoxide added to the amount of the basic compound added is preferably 2.7 or less, more preferably 2.5 or less, still more preferably 2.3 or less, and further still more preferably 1.7 or less.
Also, from the viewpoint of a good water-solubility of the hydroxyalkyl cellulose produced by the process of the present invention, the ratio of the amount of the alkyleneoxide added (amount of the alkyleneoxide added based on the total amount of the alkyleneoxide to be added during the process) to the amount of the basic compound added (amount of the basic compound added based on the total amount of the basic compound to be added during the process) is preferably 0.50 or more, more preferably 0.60 or more, still more preferably 0.70 or more and further still more preferably 0.75 or more. From the same viewpoint, the above ratio of the amount of the alkyleneoxide added to the amount of the basic compound added is preferably 1.5 or less, more preferably 1.2 or less, still more preferably 1.0 or less, and further

still more preferably 0.85 or less.

The form of the alkyleneoxide when added is not particularly limited, and the alkyleneoxide may be added in the form of either a gas or a liquid. The liquid alkyleneoxide may be used as such, or may be used in the form of a dilute solution prepared by diluting the alkyleneoxide with a good solvent for the alkyleneoxide, such as water, in order to enhance a handling property of the liquid by reduction in viscosity thereof, etc.

The method of addition of the alkyleneoxide is not particularly limited, and the alkyleneoxide may be added all at once, in several split portions, continuously or combination thereof. In order to uniformly disperse the alkyleneoxide in a mixture of the cellulose raw material and the basic compound to conduct a reaction therebetween, it is preferred that while stirring a mixture of the finely milled cellulose and the basic compound, the alkyleneoxide is added thereto in several split portions or continuously.

[Solvent]

The reaction in the step 1 may be carried out in the presence of a non-aqueous solvent for the purpose of facilitating the stirring operation of the mixture of the basic mixture and the alkyleneoxide.

Examples of the non-aqueous solvent are those generally used upon the reaction between a cellulose and an alkyleneoxide. Specific examples of the non-aqueous solvent include secondary or tertiary lower alcohols having 3 or 4 carbon atoms, such as isopropanol and tert-butanol; ketones having 3 to 6 carbon atoms, such as acetone, methyl ethyl ketone and methyl isobutyl ketone; ether solvents such as 1,4-dioxane, ethylene glycol dimethyl ether, diethylene glycol dimethyl ether and tetrahydrofuran; and aprotic polar solvents such as dimethyl sulfoxide. Of these solvents, preferred are isopropanol and tetrahydrofuran.

From the viewpoint of a high reaction selectivity, the non-aqueous solvent is preferably used in an amount of 1% by mass or more, more preferably 5% by mass or more, still more preferably 10% by mass or more, and further still more preferably 12% by mass or more on the basis of the remaining mass obtained by subtracting the amount of water from the amount of the cellulose raw material used therein.

On the other hand, from the viewpoint of a high productivity, the non-aqueous solvent is preferably used in an amount of 100% by mass or less, more preferably 70% by mass or less, still more preferably 50% by mass or less, and further still more preferably 30% by mass or less on the basis of the remaining mass obtained by subtracting the amount of water from the amount of the cellulose raw material used therein.

The cellulose and the alkyleneoxide are preferably held not in a slurried, highly-viscous or aggregated state but in a fluid powdery state upon the reaction therebetween.

[Reaction Apparatus]

Examples of a reaction apparatus used in the alkyleneoxide addition reaction include those apparatuses capable of mixing and stirring the basic compound and the alkyleneoxide, e.g., the aforementioned mixers such as a loedige mixer and a Ploughshare mixer, and mixing devices used for kneading a powder, a highly-viscous substance, a resin or the like, such as a so-called kneader. In the case where the alkyleneoxide used is present in a vapor state at the reaction temperature, there is preferably used a highly-sealed pressure apparatus capable of resisting high pressure conditions of the reaction.

[End Point of Reaction]

The end point of the alkyleneoxide addition reaction in the step 1 is the time at which the reaction conversion rate of the alkyleneoxide charged into the reaction vessel reaches a desired level. The reaction conversion rate used herein is determined from the following formula.

Reaction Conversion Rate (%) = {[Amount (g) of alkyleneoxide remaining in reaction vessel]/[Amount (g) of alkyleneoxide charged into reaction vessel]} x 100

The amount of the alkyleneoxide present in the reaction vessel is determined as follows. That is, after cooling the reaction vessel to a temperature lower than a boiling point of the alkyleneoxide, preferably 0°C or lower, for example, after cooling the reaction vessel in a dry ice, the reaction mixture is sampled therein, and 40 mL of isopropyl alcohol are added thereto. Successively, acetic acid is added to the reaction vessel to adjust a pH value of the reaction solution to

5 to 7. The resulting reaction solution is treated within an ultrasonic wave generator for 10 min and then subjected to centrifugal separation, and then the obtained supernatant liquid is subjected to gas chromatography to calculate the amount of the alkyleneoxide therein.

From the viewpoint of a high reaction selectivity and a good water-solubility of the hydroxyalkyl cellulose produced by the process of the present invention, the reaction conversion rate of the alkyleneoxide at the end point of the reaction in the step 1 is preferably 80% or more, more preferably 90% or more, still more preferably 95% or more, and most preferably 100%.

[Reaction Conditions]

The temperature used the alkyleneoxide addition reaction may be appropriately adjusted according to a desired reaction conversion rate of the alkyleneoxide used, a reactivity of the alkyleneoxide, etc., and is therefore not particularly limited. From the viewpoint of attaining a high reaction rate, the temperature used the alkyleneoxide addition reaction is preferably 0°C or higher, more preferably 20°C or higher, and still more preferably 30°C or higher. Also, from the viewpoint of suppressing decomposition of the alkyleneoxide and alkali cellulose, the temperature used the alkyleneoxide addition reaction is preferably 200°C or lower, more preferably 100°C or lower, and still more preferably 80°C or lower. More specifically, from these viewpoints, the temperature used the alkyleneoxide addition reaction is preferably from 0 to 200°C, more preferably from 20 to 100°C, and still more preferably from 30 to 80°C.

The reaction time of the alkyleneoxide addition reaction may be appropriately adjusted according to a reaction rate of the alkyleneoxide, a desired amount of an ether group introduced, etc. From the viewpoint of attaining a high reaction yield of the alkyleneoxide, the reaction time is preferably 0.1 h or longer, more preferably 0.2 h or longer, still more preferably 0.5 h or longer, further still more preferably 1 h or longer, and further still more preferably 5 h or longer, and is also preferably 72 h or shorter, more preferably 36 h or shorter, still more preferably 18 h or shorter, and further still more preferably 12 h or shorter. More specifically, the reaction time is preferably from 0.1 to 72 h, more preferably from 0.2 to 36 h, still more preferably from 0.5 to 18 h, further still more preferably from 1 to 12 h, and further still more preferably from 5 to 12 h.

In the case where the alkyleneoxide is added dropwise or in several split portions, the above reaction time is intended to include the time required for the dropwise addition or split addition.

In the case where the alkyleneoxide is present in a gas state under the reaction conditions, the reaction is preferably carried out under an applied pressure. In such a case, the reaction pressure may be appropriately adjusted by suitably controlling a boiling point of the alkyleneoxide, an amount of the alkyleneoxide present in the vessel, a reaction temperature, etc. Specifically, the reaction pressure is usually not less than 0.001 MPa and not more than 10 MPa (gauge pressure). From the viewpoints of a high alkyleneoxide addition reaction rate and a reduced burden on facilities, the reaction pressure is preferably 0.005 MPa or more, and more preferably 0.02 MPa or more, and is also preferably 1 MPa or less, and more preferably 0.5 MPa or less.

(Step 2)

[Addition of Basic Compound]

In the step 2, a remaining amount of the basic compound not added in the step 1 among the total amount of the basic compound to be added during the process and a remaining amount of the alkyleneoxide not added in the step 1 are added to the reaction mixture obtained in the step 1 and conductd a reaction therebetween.

The basic compound added in the step 2 may be either the same as or different from the basic compound added in the step 1.

The form of the basic compound added, addition method of the basic compound, apparatuses used for stirring and mixing upon addition of the basic compound, and preferred forms thereof, are the same as those described in the paragraph "Addition of Basic Compound" for the above step 1 except that the object to which the basic compound is added is not the cellulose raw material but the reaction mixture obtained in the step 1.

[Adjustment of Water Content]

Similarly to the step 1, in the step 2, it is also preferred that the water content in the system is adjusted upon or after adding the basic compound to the reaction mixture obtained in the step 1. The adjustment of the water content in the system allows production of the alkali cellulose from the cellulose and the basic compound to efficiently proceed, so that the alkyleneoxide can be promoted addition reaction with the alkali cellulose in an efficient manner.

From the viewpoint of increasing a rate of production of the alkali cellulose, the water content in the system of the step 2 is preferably 20% by mass or more, more preferably 25% by mass or more, still more preferably 30% by mass

or more, further still more preferably 40% by mass or more, and further still more preferably 50% by mass or more on the basis of the remaining mass obtained by subtracting the amount of water from the amount of the cellulose raw material used in the step 1.

On the other hand, from the viewpoint of a high addition reaction selectivity of the alkyleneoxide (on the basis of the alkyleneoxide), the water content in the system in the step 2 is preferably 90% by mass or less, more preferably 80% by mass or less, and still more preferably 70% by mass or less on the basis of the remaining mass obtained by subtracting the amount of water from the amount of the cellulose raw material used in the step 1.

In the case where the water content is adjusted by adding water to the system, the order of addition of the basic compound and water, addition methods of these components, apparatuses used for mixing water and the reaction mixture obtained in the step 1 or for mixing water, the reaction mixture obtained in the step 1 and the basic compound added in the step 2, and preferred forms thereof are the same as those described in the paragraph "Adjustment of Water Content" for the above step 1 except that the object to which water is added is not the cellulose raw material or a mixture of the cellulose raw material and the basic compound but the reaction mixture obtained in the step 1 or a mixture of the above reaction mixture and the basic compound added in the step 2.

[Aging]

In the step 2, in the case where the basic compound and water are added to the reaction mixture obtained in the step 1, the resulting mixture is preferably subsequently aged because a sufficient amount of the alkali cellulose can be produced before the below-mentioned addition reaction with the alkyleneoxide.

The aging temperature range, aging time and preferred ranges thereof are the same as those described in the paragraph "Aging" for the above step 1.

Also, specific examples of the apparatus used for the aging are the same as those described in the paragraph "Aging" for the above step 1. From the viewpoint of simplicity and convenience of the aging operation, it is preferred that the aging is carried out in the same reaction apparatus as used in the reaction of the step 1.

The above addition of the basic compound, addition of water and aging may be carried out in an inert gas atmosphere such as nitrogen, if required, from the viewpoint of avoiding coloration of the hydroxyalkyl cellulose produced by the process of the present invention and preventing reduction in degree of polymerization thereof.

[Addition of Alkyleneoxide]

In the step 2, after adding a remaining amount of the basic compound not added in the step 1 among the total amount of the basic compound to be added during the process, a remaining amount of the alkyleneoxide not added in the step 1 among the total amount of the alkyleneoxide to be added during the process is added.

The alkyleneoxide added in the step 2 may be either the same as or different from the alkyleneoxide added in the step 1.

The form of the alkyleneoxide added, addition method of the alkyleneoxide, apparatuses used for stirring and mixing upon addition of the alkyleneoxide, and preferred forms thereof, are the same as those described in the paragraph "Addition of Alkyleneoxide". for the above step 1 except that the object to which the alkyleneoxide is added is not the cellulose raw material, the basic compound and a mixture of any of these compounds with water, but the reaction mixture obtained in the step 1 and the basic compound added in the step 2.

[Solvent]

The reaction of the step 2 may be carried out in the presence of a non-aqueous solvent for the purpose of facilitating the stirring operation of a mixture of the reaction mixture obtained in the step 1, the basic compound and the alkyleneoxide.

The kind and amount of the non-aqueous solvent used in the step 2 and preferred forms thereof are the same as those described in the paragraph "Solvent" for the above step 1.

In the case where the solvent is used in both the steps 1 and 2, it is preferred that the solvent used in the step 2 is the same as the solvent used in the step 1.

[Reaction Apparatus]

Specific examples of the reaction apparatus usable in the step 2 and preferred forms thereof are the same as those described in the paragraph "Reaction Apparatus" for the above step 1. From the viewpoint of simplicity and convenience of operations in the production process, it is especially preferred that the reaction apparatus used in the step 1 is also used in the step 2.

[End Point of Reaction]

The end point of the reaction of the step 2 and preferred ranges thereof are the same as those described in the paragraph "End Point of Reaction" for the above step 1.

[Reaction Conditions]

The reaction temperature and reaction time used in the reaction of the step 2, and preferred ranges thereof are the same as those described in the paragraph "Reaction Conditions" for the above step 1.

Meanwhile, the alkyleneoxide addition reaction in each of the steps 1 and 2 is preferably carried out in an inert gas atmosphere such as nitrogen, if required, from the viewpoints of avoiding undesirable coloration and preventing reduction in degree of polymerization of the hydroxyalkyl cellulose produced by the process of the present invention.

In the case where the alkyleneoxide is present in a gas state under the reaction conditions, the reaction is preferably carried out under an applied pressure from the viewpoint of a high reaction rate. The reaction pressure may be appropriately adjusted by suitably controlling a boiling point of the alkyleneoxide, an amount of the alkyleneoxide present in the vessel, a reaction temperature, etc. The reaction pressure is usually from 0.001 to 10 MPa (gauge pressure). From the viewpoints of a high alkyleneoxide addition reaction rate and a reduced burden on facilities, the reaction pressure is preferably from 0.005 to 1 MPa (gauge pressure), and more preferably from 0.02 to 0.5 MPa (gauge pressure).

[Post-Treatment]

After completion of the step 2, the basic compound and the alkyleneoxide may be further added to react with the obtained reaction product, or the reaction product may be subjected, if required, to known purification treatments such as neutralization of the basic compound with an acid and washing with a solvent such as hydrous isopropanol and hydrous acetone, and then the resulting hydroxyalkyl cellulose may be isolated therefrom.

[Hydroxyalkyl Cellulose]

In the process of the present invention, when propyleneoxide or the like is used as the alkyleneoxide, it is possible to produce hydroxypropyl cellulose or the like in an efficient manner.

When the hydroxyalkyl cellulose produced by the process of the present invention is compounded in an aqueous product, precipitates such as water-insoluble coarse particles, etc., are hardly produced, so that it is possible to obtain products having a good appearance. For this reason, the hydroxyalkyl cellulose according to the present invention can be suitably used as components to be compounded in cleaning agent compositions such as shampoos, rinses, treatments and conditioners, cosmetic compositions such as milky lotions and creams, and fabric softener compositions. In addition, the hydroxyalkyl cellulose according to the present invention can be extensively used in the applications such as polymer surfactants, dispersants, emulsifiers, modifiers, aggregating agents and viscosity controllers.

[Production of Cationized Hydroxyalkyl Cellulose]

The process for producing a cationized hydroxyalkyl cellulose according to the present invention is a process including the step of reacting the hydroxyalkyl cellulose produced by the process of the present invention with a cationizing agent.

<Cationizing Agent>

The cationizing agent used in the present invention includes a compound represented by the following general formula (1) or a compound represented by the following general formula (2).

General formula (1):

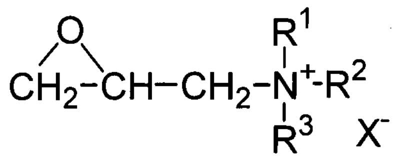

General formula (2):

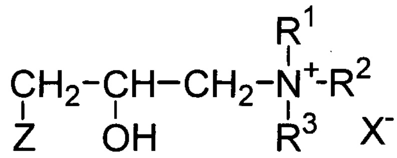

In the general formulae (1) and (2), $R^1$ to $R^3$ are each independently a linear or branched hydrocarbon group having 1 to 4 carbon atoms. From the viewpoints of a high water-solubility of the cationized hydroxyalkyl cellulose produced by the process of the present invention, in particular, a cationized hydroxypropyl cellulose (hereinafter occasionally referred to merely as "C-HPC") or a cationized hydroxyethyl cellulose as well as a good availability of the cationizing agent, preferred hydrocarbon groups as $R^1$ to $R^3$ are a methyl group and an ethyl group, and more preferred is a methyl group.

In the general formulae (1) and (2), X represents a halogen atom. Specific examples of the halogen atom as X include chlorine, bromine and iodine. Among these halogen atoms, from the viewpoint of a high water-solubility of the C-HPC produced by the process of the present invention and a good availability of the cationizing agent, preferred are chlorine and bromine, and more preferred is chlorine.

In the general formula (2), Z represents a halogen atom. From the same viewpoints as describe above, among these halogen atoms, preferred are chlorine and bromine, and more preferred is chlorine.

In the following, the process for producing C-HPC as a typical example of the cationized hydroxyalkyl cellulose is described.

Specific examples of the compounds represented by the above general formulae (1) and (2) which are used for producing C-HPC include chlorides, bromides and iodides of glycidyl trimethyl ammonium, glycidyl triethyl ammonium and glycidyl tripropyl ammonium; chlorides of 3-chloro-2-hydroxypropyl trimethyl ammonium, 3-chloro-2-hydroxypropyl triethyl ammonium and 3-chloro-2-hydroxypropyl tripropyl ammonium; bromides of 3-bromo-2-hydroxypropyl trimethyl ammonium, 3-bromo-2-hydroxypropyl triethyl ammonium and 3-bromo-2-hydroxypropyl tripropyl ammonium; and iodides of 3-iodo-2-hydroxypropyl trimethyl ammonium, 3-iodo-2-hydroxypropyl triethyl ammonium and 3-iodo-2-hydroxypropyl tripropyl ammonium.

Among these compounds represented by the above general formulae (1) and (2), from the viewpoint of a good availability, preferred are chlorides and bromides of glycidyl trimethyl ammonium and glycidyl triethyl ammonium, chlorides of 3-chloro-2-hydroxypropyl trimethyl ammonium and 3-chloro-2-hydroxypropyl triethyl ammonium, and bromides of 3-bromo-2-hydroxypropyl trimethyl ammonium and 3-bromo-2-hydroxypropyl triethyl ammonium; more preferred are glycidyl trimethyl ammonium chloride and 3-chloro-2-hydroxypropyl trimethyl ammonium chloride; and especially preferred is 3-chloro-2-hydroxypropyl trimethyl ammonium chloride.

These cationizing agents may be used alone or in combination of any two or more thereof.

When reacting these cationizing agents with the hydroxyalkyl cellulose, a quaternary ammonium salt-substituted propyleneoxy group represented by the following general formula (3) or (4) (hereinafter occasionally referred to merely as a "cationic group") can be introduced into the hydroxyalkyl cellulose.

General formula (3):

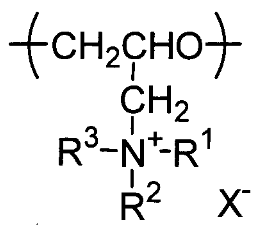

General formula (4):

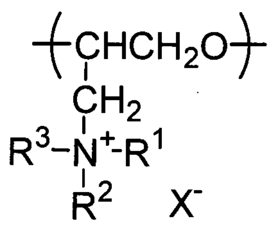

In the above general formulae (3) and (4), $R^1$ to $R^3$ and X have the same meanings as those defined in the aforementioned general formulae (1) and (2).

The cationic group may be substituted for hydrogen atoms of a part or whole of hydroxyl groups of the hydroxyalkyl cellulose, or may be substituted for hydrogen atoms of terminal hydroxyl groups of the cationic group already bonded to the hydroxyalkyl cellulose. In the general formula (3) or (4), an oxygen atom of the quaternary ammonium salt-substituted propyleneoxy group being present at a terminal end thereof is bonded with a hydrogen atom to form a hydroxyl group.

The average number of the cationic groups introduced into the hydroxyalkyl cellulose per AGU (hereinafter occasionally referred to merely as a "the degree of substitution with cationic group") is preferably 0.01 or more, more preferably from 0.02 or more, still more preferably from 0.03 or more, further still more preferably from 0.05 or more, and further still more preferably from 0.10 or more, and is also preferably 2.5 or less, more preferably 1 or less, still more preferably 0.6 or less, further still more preferably 0.4 or less, and further still more preferably 0.3 or less from the viewpoint of a good performance of the obtained C-HPC.

The amount of the cationizing agent used may be appropriately controlled such that the degree of substitution with cationic group falls within the above-specified desired range, and is preferably 0.01 mol or more, more preferably

0.02 mol or more, still more preferably 0.03 mol or more, further still more preferably 0.05 mol or more, and further still more preferably 0.10 mol or more per 1 mol of AGU contained in a molecule of the hydroxyalkyl cellulose, and is also preferably 10 mol or less, more preferably 4 mol or less, still more preferably 2.5 mol or less, further still more preferably 1 mol or less, and further still more preferably 0.5 mol or less per 1 mol of AGU contained in a molecule of the hydroxyalkyl cellulose.

When using the cationizing agent, the cationizing agent having a high purity may be directly added to the reaction system. Alternatively, from the viewpoint of a good handling property, the cationizing agent may be added in the form of a solution prepared by dissolving the cationizing agent in a solvent such as water.

The cationizing agent may be added to the reaction system either all at once, in several split portions, continuously, or in combination of these addition methods. In order to uniformly disperse the cationizing agent in the hydroxyalkyl cellulose to react therewith, the cationizing agent is preferably added to the reaction system either in several split portions or continuously while stirring the hydroxyalkyl cellulose.

(Catalyst)

The catalyst used in the cationization reaction may be either a base catalyst or an acid catalyst.

Examples of the base catalyst include alkali metal hydroxides such as sodium hydroxide, potassium hydroxide and lithium hydroxide, alkali earth metal hydroxides such as magnesium hydroxide and calcium hydroxide, and tertiary amines such as trimethylamine, triethylamine and triethylenediamine. Examples of the acid catalyst include Lewis acid catalysts such as lanthanide triflates.

Among these catalysts, from the viewpoint of preventing reduction in degree of polymerization of the cellulose, preferred are base catalysts, more preferred are alkali metal hydroxides, and still more preferred are sodium hydroxide and potassium hydroxide. These catalysts may be used alone or in combination of any two or more thereof.

In the reaction of the present invention, it is sufficient that the catalyst is used in a catalytic amount on the basis of both the hydroxyalkyl cellulose and the cationizing agent. More specifically, the catalyst is used in an amount of preferably 0.1 mol% or more, more preferably 1 mol% or more and still more preferably 5 mol% or more, and also in an amount of preferably 150 mol% or less, more preferably 100 mol% or less and still more preferably 50 mol% or less on the basis of AGU contained in a molecule of the hydroxyalkyl cellulose.

When using the compound represented by the above general formula (2) as the cationizing agent, a stoichiometric amount of a hydrogen halide is produced upon the reaction. Therefore, when using a base as the catalyst, the catalyst is preferably added in an amount of a sum of the above catalytic amount and its stoichiometric amount based on the cationizing agent.

The catalyst may be added directly in the form of a high-purity catalyst or may be added in the form of a solution prepared by dissolving the catalyst in a solvent such as water.

Also, the catalyst may be added to the reaction system either all at once, in several split portions, continuously, or in combination of these addition methods. Among these addition methods, in order to uniformly disperse the catalyst in the hydroxyalkyl cellulose to react therewith, the catalyst is preferably added to the reaction system either in several split portions or continuously while stirring the hydroxyalkyl cellulose.

In addition, the catalyst used in the hydroxyalkylation reaction may be used as such in the cationization reaction without need of neutralization or removal of the catalyst, etc., after completion of the hydroxyalkylation reaction. In view of avoiding the increase in burdens on purification treatment owing to formation of salts, the catalyst used in the hydroxyalkylation reaction is preferably used as such in the subsequent cationization reaction.

(Water Content)

The water content upon the cationization reaction is preferably 10% by mass or more, more preferably 30% by mass or more, and still more preferably 50% by mass or more on the basis of the cellulose raw material used in the hydroxyalkylation reaction from the viewpoint of enhancing a reaction rate, and is also preferably 150% by mass or less, more preferably 140% by mass or less, and still more preferably 120% by mass or less on the basis of the cellulose raw material used in the hydroxyalkylation reaction from the viewpoints of maintaining a powdery condition of the hydroxyalkyl cellulose, enhancing a reaction selectivity of the cationization reaction, and increasing a productivity of C-HPC.

When the catalyst and/or the cationizing agent are used in the form of an aqueous solution and the water content in the reaction system upon initiation of the reaction exceeds the above-specified range, the water content may be adjusted to fall within the above-specified range by conducting an ordinary dehydration procedure such as pressure reduction, heating, etc. The dehydration procedure may be carried out either after completion of introducing the catalyst aqueous solution and/or cationizing agent aqueous solution into the reaction vessel, or simultaneously with introduction of these aqueous solutions into the reaction vessel.

(Non-Aqueous Solvent)

The cationization reaction may proceed without any non-aqueous solvent other than water. However, for the purpose of uniformly dispersing the cationizing agent or the catalyst, the cationization reaction may also be carried out in the presence of the non-aqueous solvent together with water.

The amount of the non-aqueous solvent used in the cationization reaction may suitably lie within the range of from 0 to 40% by mass on the basis of the cellulose raw material used in the hydroxyalkylation reaction. When using the non-aqueous solvent in the above-specified amount, not only a good productivity can be attained, but also the hydroxyalkyl cellulose can be maintained in a powdery state. As a result, the reaction system can be stirred efficiently to conduct the reaction uniformly, and decomposition of the cationizing agent or side reactions of the cationizing agent with the non-aqueous solvent can be suppressed so that the cationization reaction can be allowed to proceed in an efficient manner. From these viewpoints, the amount of the non-aqueous solvent used in the cationization reaction is preferably from 0 to 30% by mass and more preferably from 0 to 20% by mass.

The non-aqueous solvent used in the cationization reaction is not particularly limited, and is preferably a polar solvent. Examples of the polar solvent include $C_1$ to $C_5$ alcohols such as isopropanol, isobutanol and tert-butanol; ether solvents such as 1,4-dioxane, ethylene glycol dimethyl ether, diethylene glycol dimethyl ether and triethylene glycol dimethyl ether; and aprotic polar solvents such as dimethyl sulfoxide and dimethyl formamide. Among these non-aqueous solvents, from the viewpoint of suppressing side reactions with the cationizing agent, preferred are secondary or tertiary alcohols having 3 to 5 carbon atoms, ether solvents and aprotic polar solvents.

These non-aqueous solvents may be used alone or in the form of a mixture of any two or more thereof.

The kind, amount and preferred form of the non-aqueous solvent used in the cationization reaction may be the same as those used in the aforementioned hydroxyalkylation process. Therefore, the non-aqueous solvent being present after completion of the hydroxyalkylation reaction may also be directly used as the non-aqueous solvent for the cationization reaction without need of any removal or addition of the non-aqueous solvent.

(Reaction Apparatus and Reaction Conditions)

The reaction apparatus usable in the cationization reaction may include reaction rate, and suppressing decomposition of the cationizing agent and coloration of C-HPC produced .

In addition, from the viewpoint of suppressing undesirable coloration upon the reaction, the cationization reaction is preferably carried out in an atmosphere of an inert gas such as nitrogen.

After completion of the cationization reaction, the reaction product may be subjected, if required, to a purification treatment such as neutralization of the catalyst and washing with a solvent such as hydrous isopropanol and hydrous acetone, etc., to thereby isolate the cationized hydroxyalkyl cellulose, in particular, C-HPC therefrom.

With respect to the aforementioned embodiments, the present invention further includes the following aspects relating to a process for producing a hydroxyalkyl cellulose, a hydroxyalkyl cellulose produced by the process, and a process for producing a cationized hydroxyalkyl cellulose using the hydroxyalkyl cellulose thus produced.

<1> A process for producing a hydroxyalkyl cellulose by adding a basic compound and an alkyleneoxide to a cellulose to conduct a reaction therebetween in which the basic compound is added in a total amount of not less than 0.7 mol and not more than 1.5 mol per 1 mol of an anhydroglucose unit in the cellulose, and the alkyleneoxide is added in a total amount of not less than 1.0 mol and not more than 3.0 mol per 1 mol of the anhydroglucose unit in the cellulose, the process including the following steps 1 and 2:

Step 1: adding the basic compound in an amount of not less than 50% and not more than 95% of the total amount of the basic compound to be added during the process, and then adding the alkyleneoxide in an amount of not less than 30% and not more than 80% of the total amount of the alkyleneoxide to be added during the process to react the compounds with the cellulose, thereby obtaining a reaction mixture; and

Step 2: adding a remaining amount of the basic compound not added in the step 1 and a remaining amount of the alkyleneoxide not added in the step 1 to the reaction mixture obtained in the step 1 to conduct a reaction therebetween.

<2> The process for producing a hydroxyalkyl cellulose as described in the above aspect <1>, wherein the basic compound is added in a total amount of preferably 0.8 mol or more, and more preferably 0.9 mol or more per 1 mol of an anhydroglucose unit in the cellulose, and is also added in a total amount of preferably 1.4 mol or less, more preferably 1.3 mol or less, still more preferably 1.2 mol or less, and further still more preferably 1.1 mol or less per 1 mol of an anhydroglucose unit in the cellulose, and more specifically is added in a total amount of preferably from 0.7 to 1.4 mol, more preferably from 0.7 to 1.3 mol, still more preferably from 0.7 to 1.2 mol, further still more

preferably from 0.7 to 1.2 mol, further still more preferably from 0.8 to 1.1 mol, and further still more preferably from 0.9 to 1.1 mol per 1 mol of an anhydroglucose unit in the cellulose.

<3> The process for producing a hydroxyalkyl cellulose as described in the above aspect <1> or <2>, wherein the alkyleneoxide is added in a total amount of preferably 1.2 mol or more, more preferably 1.4 mol or more, still more preferably 1.6 mol or more, and further still more preferably 1.8 mol or more per 1 mol of an anhydroglucose unit in the cellulose, and is also added in a total amount of preferably 2.8 mol or less, more preferably 2.5 mol or less, and still more preferably 2.3 mol or less per 1 mol of an anhydroglucose unit in the cellulose, and more specifically is added in a total amount of preferably from 1.2 to 2.8 mol, more preferably from 1.4 to 2.5 mol, still more preferably from 1.6 to 2.5 mol, further still more preferably from 1.8 to 2.5 mol, and further still more preferably from 1.8 to 2.3 mol per 1 mol of an anhydroglucose unit in the cellulose.

<4> The process for producing a hydroxyalkyl cellulose as described in any one of the above aspects <1> to <3>, wherein the alkyleneoxide is added in a total amount of preferably from 1.2 to 3.0 mol, more preferably from 1.4 to 3.0 mol, still more preferably from 1.6 to 3.0 mol, further still more preferably from 1.8 to 3.0 mol per 1 mol of an anhydroglucose unit in the cellulose.

<5> The process for producing a hydroxyalkyl cellulose as described in any one of the above aspects <1> to <4>, wherein the amount of the basic compound added in the step 1 is preferably 52% or more, more preferably 55% or more, still more preferably 58% or more and further still more preferably 60% or more of the total amount of the basic compound to be added during the process, and is also preferably 90% or less, more preferably 85% or less, and still more preferably 80% or less of the total amount of the basic compound to be added during the process, and more specifically is preferably from 52 to 95%, more preferably from 55 to 90%, still more preferably 58 to 85%, and further still more preferably from 60 to 80% of the total amount of the basic compound to be added during the process.

<6> The process for producing a hydroxyalkyl cellulose as described in any one of the above aspects <1> to <5>, wherein the amount of the alkyleneoxide added in the step 1 is preferably 35% or more, more preferably 40% or more, still more preferably 45% or more, and further still more preferably 49% or more of the total amount of the alkyleneoxide to be added during the process, and is also preferably 78% or less, more preferably 76% or less, still more preferably 74% or less, and further still more preferably 70% or less of the total amount of the alkyleneoxide to be added during the process, and more specifically is preferably from 35 to 78%, more preferably from 40 to 76%, still more preferably from 45 to 74%, and further still more preferably 49 to 70% of the total amount of the more preferably from 60 to 80% of the total amount of the basic compound to be added during the process.

<6> The process for producing a hydroxyalkyl cellulose as described in any one of the above aspects <1> to <5>, wherein the amount of the alkyleneoxide added in the step 1 is preferably 35% or more, more preferably 40% or more, still more preferably 45% or more, and further still more preferably 49% or more of the total amount of the alkyleneoxide to be added during the process, and is also preferably 78% or less, more preferably 76% or less, still more preferably 74% or less, and further still more preferably 70% or less of the total amount of the alkyleneoxide to be added during the process, and more specifically is preferably from 35 to 78%, more preferably from 40 to 76%, still more preferably from 45 to 74%, and further still more preferably 49 to 70% of the total amount of the alkyleneoxide to be added during the process.

<7> The process for producing a hydroxyalkyl cellulose as described in any one of the above aspects <1> to <6>, wherein a molar ratio of the amount of the alkyleneoxide added in the step 1 (number of moles of the alkyleneoxide per 1 mol of an anhydroglucose unit in the cellulose) to the amount of the basic compound added in the step 1 (number of moles of the basic compound per 1 mol of an anhydroglucose unit in the cellulose) is preferably 0.9 or more, more preferably 1.1 or more, still more preferably 1.5 or more, and further still more preferably 1.6 or more, and is also preferably 2.7 or less, more preferably 2.5 or less, still more preferably 2.3 or less, and further still more preferably 1.7 or less.

<8> The process for producing a hydroxyalkyl cellulose as described in any one of the above aspects <1> to <7>, wherein a ratio of the amount of the alkyleneoxide added in the step 1 (amount of the alkyleneoxide added based on the total amount of the alkyleneoxide to be added during the process) to the amount of the basic compound added in the step 1 (amount of the basic compound added based on the total amount of the basic compound to be added during the process) is preferably 0.50 or more, more preferably 0.60 or more, still more preferably 0.70 or more, and further still more preferably 0.75 or more, and is also preferably 1.5 or less, more preferably 1.2 or less, still more preferably 1.0 or less, and further still more preferably 0.85 or less.

<9> The process for producing a hydroxyalkyl cellulose as described in any one of the above aspects <1> to <8>, wherein a water content upon the reaction of the step 1 is preferably 20% by mass or more, more preferably 25% by mass or more, still more preferably 30% by mass or more, and further still more preferably 40% by mass or more, and is also preferably 90% by mass or less, more preferably 80% by mass or less, still more preferably 70% by mass or less, and further still more preferably 60% by mass or less, and more specifically is preferably from 20 to 90% by mass, more preferably from 25 to 80% by mass, still more preferably from 30 to 70% by mass, and further

still more preferably from 40 to 60% by mass, on the basis of a remaining mass obtained by subtracting an amount of water from an amount of the cellulose raw material.

<10> The process for producing a hydroxyalkyl cellulose as described in any one of the above aspects <1> to <9>, wherein a water content upon the reaction of the step 2 is preferably 20% by mass or more, more preferably 25% by mass or more, still more preferably 30% by mass or more, further still more preferably 40% by mass or more, and further still more preferably 50% by mass or more, and is also preferably 90% by mass or less, more preferably 80% by mass or less, and still more preferably 70% by mass or less, and more specifically is preferably from 20 to 90% by mass, more preferably from 25 to 80% by mass, still more preferably from 30 to 70% by mass, further still more preferably from 40 to 70% by mass, and further still more preferably from 50 to 70% by mass, on the basis of a remaining mass obtained by subtracting an amount of water from an amount of the cellulose raw material.

<11> The process for producing a hydroxyalkyl cellulose as described in any one of the above aspects <1> to <10>, wherein a crystallinity of the cellulose raw material is preferably 10% or more, more preferably 12% or more, and still more preferably 15% or more, and is also preferably 50% or less, more preferably 40% or less, and still more preferably 30% or less, and more specifically is preferably from 10 to 50%, more preferably from 12 to 40%, and still more preferably from 15 to 30%.

<12> The process for producing a hydroxyalkyl cellulose as described in any one of the above aspects <1> to <11>, wherein a degree of polymerization of the cellulose raw material is preferably 100 or more, more preferably 200 or more, still more preferably 500 or more, and further still more preferably 1000 or more, and is also preferably 3000 or less, more preferably 2500 or less, still more preferably 2200 less, and further still more preferably 2000 or less, and more specifically is preferably from 100 to 3000, more preferably from 200 to 2500, still more preferably from 500 to 2200, and further still more preferably from 1000 to 2000.

<13> The process for producing a hydroxyalkyl cellulose as described in any one of the above aspects <1> to <12>, wherein the cellulose raw material is obtained by subjecting at least one material selected from the group consisting of pulps, papers, stems and leaves of plants and shells of plants to mechanical decrystallization.

<14> The process for producing a hydroxyalkyl cellulose as described in the above aspect <13>, wherein an apparatus used for the mechanical decrystallization is preferably a tank-drive media mill or a media agitating mill, more preferably a tank-drive media mill, and still more preferably a vibration ball mill, a vibration rod mill or a vibration tube mill.

<15> The process for producing a hydroxyalkyl cellulose as described in the above aspect <14>, wherein an outer diameter of each of rods filled in the vibration rod mill is from 0.1 to 100 mm and preferably from 0.5 to 50 mm, and a filling rate of the rods in the vibration rod mill is from 10 to 97% and preferably from 15 to 95%.

<16> The process for producing a hydroxyalkyl cellulose as described in any one of the above aspects <13> to <15>, wherein the mechanical decrystallization is carried out at a temperature of from -20 to 200°C and preferably from -10 to 150°C.

<17> The process for producing a hydroxyalkyl cellulose as described in any one of the above aspects <13> to <16>, wherein a treating time of the mechanical decrystallization is from 0.01 to 20 h, preferably from 0.05 to 10 h and more preferably from 0.1 to 5 h.

<18> The process for producing a hydroxyalkyl cellulose as described in any one of the above aspects <13> to <17>, wherein a median size of the finely milled cellulose obtained after the mechanical decrystallization is from 10 to 1000 $\mu$m, preferably from 20 to 500 $\mu$m, and more preferably from 30 to 200 $\mu$m.

<19> The process for producing a hydroxyalkyl cellulose as described in any one of the above aspects <1> to <18>, wherein the basic compound is preferably an alkali metal hydroxide, and more preferably at least one compound selected from the group consisting of sodium hydroxide and potassium hydroxide.

<20> The process for producing a hydroxyalkyl cellulose as described in any one of the above aspects <1> to <19>, wherein the basic compound is used in the form of an aqueous solution in the steps 1 and 2.

<21> The process for producing a hydroxyalkyl cellulose as described in any one of the above aspects <1> to <20>, wherein the alkyleneoxide is ethyleneoxide or propyleneoxide, and preferably propyleneoxide.

<22> The process for producing a hydroxyalkyl cellulose as described in any one of the above aspects <1> to <21>, wherein a temperature used upon the alkyleneoxide addition reaction is preferably 0°C or higher, more preferably 20°C or higher, and still more preferably 30°C or higher, and is also preferably 200°C or lower, more preferably 100°C or lower, and still more preferably 80°C or lower, and more specifically is preferably from 0 to 200°C, more preferably from 20 to 100°C, and still more preferably from 30 to 80°C.

<23> The process for producing a hydroxyalkyl cellulose as described in any one of the above aspects <1> to <22>, wherein a reaction time of the alkyleneoxide addition reaction is preferably 0.1 h or longer, more preferably 0.2 h or longer, still more preferably 0.5 h or longer, further still more preferably 1 h or longer, and further still more preferably 5 h or longer, and is also preferably 72 h or shorter, more preferably 36 h or shorter, still more preferably 18 h or shorter, and further still more preferably 12 h or shorter, and more specifically is preferably from 0.1 to 72 h, more preferably from 0.2 to 36 h, still more preferably from 0.5 to 18 h, further still more preferably from 1 to 12

h, and further still more preferably from 5 to 12 h.

<24> The process for producing a hydroxyalkyl cellulose as described in any one of the above aspects <1> to <23>, wherein a reaction apparatus used therein is a loedige mixer, a Ploughshare mixer or a kneader.

<25> The process for producing a hydroxyalkyl cellulose as described in any one of the above aspects <1> to <24>, wherein the basic compound is added in the step 1 and the resulting mixture is subsequently aged.

<26> The process for producing a hydroxyalkyl cellulose as described in any one of the above aspects <1> to <25>, wherein the basic compound is added in the step 2 and the resulting mixture is subsequently aged.

<27> The process for producing a hydroxyalkyl cellulose as described in the above aspects <25> or <26>, wherein a temperature used upon the aging in each of the steps 1 and 2 is preferably 35°C or higher, more preferably 38°C or higher, still more preferably 40°C or higher, and further still more preferably 50°C or higher, and is also preferably 90°C or lower, more preferably 80°C or lower, and still more preferably 75°C or lower, and more specifically is preferably from 35 to 90°C, more preferably from 38 to 80°C, still more preferably from 40 to 75°C, and further still more preferably from 50 to 75°C.

<28> The process for producing a hydroxyalkyl cellulose as described in any one of the above aspects <25> to <27>, wherein a time of the aging in each of the steps 1 and 2 is preferably 0.1 h or longer, more preferably 0.2 h or longer, still more preferably 0.5 h or longer, and further still more preferably 1 h or longer, and is also preferably 24 h or shorter, more preferably 12 h or shorter, still more preferably 6 h or shorter, and further still more preferably 4 h or shorter, and more specifically is preferably from 0.1 to 24 h, more preferably from 0.2 to 12 h, still more preferably from 0.5 to 6 h, and further still more preferably from 1 to 4h.

<30> A process for producing a cationized hydroxyalkyl cellulose, including the step of reacting the hydroxyalkyl cellulose obtained by the process as described in any one of the above aspects <1> to <28> with a cationizing agent represented by the above general formula (1) or (2).

<31> The process for producing a cationized hydroxyalkyl cellulose as described in the above aspect <30>, wherein the cationizing agent is preferably a chloride or a bromide of glycidyl trimethyl ammonium or glycidyl triethyl ammonium, 3-chloro-2-hydroxypropyl trimethyl ammonium, 3-chloro-2-hydroxypropyl triethyl ammonium, 3-bromo-2-hydroxypropyl trimethyl ammonium or 3-bromo-2-hydroxypropyl triethyl ammonium, more preferably a chloride of glycidyl trimethyl ammonium or a chloride of 3-chloro-2-hydroxypropyl trimethyl ammonium, and still more preferably a chloride of 3-chloro-2-hydroxypropyl trimethyl ammonium.

<32> The process for producing a cationized hydroxyalkyl cellulose as described in the above aspect <30> or <31>, wherein an average number of cationic groups introduced into the hydroxyalkyl cellulose per AGU (degree of substitution with cationic group) is preferably 0.01 or more, more preferably from 0.02 or more, still more preferably from 0.03 or more, further still more preferably from 0.05 or more, and further still more preferably from 0.10 or more, and is also preferably 2.5 or less, more preferably 1 or less, still more preferably 0.6 or less, further still more preferably 0.4 or less, and further still more preferably 0.3 or less.

<33> The process for producing a cationized hydroxyalkyl cellulose as described in any one of the above aspects <30> to <32>, wherein an amount of the cationizing agent used therein is preferably 0.01 mol or more, more preferably 0.02 mol or more, still more preferably 0.03 mol or more, further still more preferably 0.05 mol or more, and further still more preferably 0.10 mol or more per 1 mol of AGU contained in a molecule of the hydroxyalkyl cellulose, and is also preferably 10 mol or less, more preferably 4 mol or less, still more preferably 2.5 mol or less, further still more preferably 1 mol or less, and further still more preferably 0.5 mol or less per 1 mol of AGU contained in a molecule of the hydroxyalkyl cellulose.

<34> The process for producing a cationized hydroxyalkyl cellulose as described in any one of the above aspects <30> to <33>, wherein the cationizing agent is added all at once, in several split portions, continuously or in combination thereof.

<35> The process for producing a cationized hydroxyalkyl cellulose as described in any one of the above aspects <30> to <34>, wherein a catalyst used in the cationization reaction is preferably a base or an acid, more preferably an alkali metal hydroxide selected from the group consisting of sodium hydroxide, potassium hydroxide and lithium hydroxide, an alkaline earth metal hydroxide selected from the group consisting of magnesium hydroxide and calcium hydroxide, a tertiary amine selected from the group consisting of trimethylamine, triethylamine and triethylenediamine, or a Lewis acid catalyst, still more preferably an alkali metal hydroxide, and further still more preferably sodium hydroxide or potassium hydroxide.

<36> The process for producing a cationized hydroxyalkyl cellulose as described in any one of the above aspects <30> to <35>, wherein the catalyst is used in an amount of preferably 0.1 mol% or more, more preferably 1 mol% or more and still more preferably 5 mol% or more, and also in an amount of preferably 150 mol% or less, more preferably 100 mol% or less and still more preferably 50 mol% or less on the basis of AGU contained in a molecule of the hydroxyalkyl cellulose.

<37> The process for producing a cationized hydroxyalkyl cellulose as described in any one of the above aspects <30> to <36>, wherein the catalyst is added all at once, in several split portions, continuously or in combination thereof.

<38> The process for producing a cationized hydroxyalkyl cellulose as described in any one of the above aspects <30> to <37>, wherein a water content upon the cationization reaction is preferably 10% by mass or more, more preferably 30% by mass or more, and still more preferably 50% by mass or more and is also preferably 150% by mass or less, more preferably 140% by mass or less, and still more preferably 120% by mass or less.

<39> The process for producing a cationized hydroxyalkyl cellulose as described in any one of the above aspects <30> to <38>, wherein a temperature used in the cationization reaction is preferably 0°C or higher, more preferably 20°C or higher, and still more preferably 40°C or higher, and is also preferably 100°C or lower, more preferably 90°C or lower and still more preferably 80°C or lower.

EXAMPLES

An average degree of polymerization of the cellulose raw material, a crystallinity of the cellulose, a water content of the cellulose raw material, a median size of the cellulose , an amount of a substituting group introduced, a raction selectivity and a transmittance were measured or calculated by the following methods.

(1) Measurement of Average Degree of Polymerization of Cellulose Raw Material (Copper-Ammonia Method)

The viscosity-average degree of polymerization of the cellulose raw materials used in the respective Examples and Comparative Examples were measured by the following method.

(i) Preparation of Solution for Measurement

Into a volumetric flask (100 mL), 0.5 g of copper(I) chloride and 20 to 30 mL of a 25% ammonia water were added. After complete dissolution, 1.0 g of copper(II) hydroxide was added and the mixture was diluted with a 25% ammonia water to just below the mark of the volumetric flask. The resultant mixture was stirred for 30 to 40 min to a complete solution. After adding an amount of pulp (dried under a reduced pressure of 20 kPa at 105°C for 12 h) accurately weighed, the ammonia water was added to the mark of the volumetric flask. After sealing the flask air-tightly, the mixture was stirred with a magnetic stirrer for 12 h to obtain a solution. The same procedure was repeated except for changing the amount of pulp to be added in the range of 20 to 500 mg to prepare solutions for measurement with different concentrations.

(ii) Measurement of Viscosity-Average Degree of Polymerization

The solution for measurement (copper-ammonia aqueous solution) prepared in (i) was introduced into Ubbelohde viscometer, which was then allowed to stand in a controlled temperature bath (20 ± 0.1 °C) for one hour. Then, the flow down speed of the solution was measured. Using the flow down speeds (t (s)) of copper-ammonia solutions with various pulp concentrations (g/dL) and the flow down speed ($t_0$ (s)) of the copper-ammonia aqueous solution containing no pulp, the reduced viscosity ($\eta_{sp}$/c) at each concentration was calculated from the following formula:

$$\eta_{sp}/c = (t/t_0 - 1)/c$$

wherein c is the pulp concentration (g/dL).

Then, the intrinsic viscosity [η] (dL/g) was determined by extrapolating the reduced viscosity to c = 0. The viscosity-average degree of polymerization ($DP_v$) was calculated from the following formula:

$$DP_v = 2000 \times [\eta]$$

wherein 2000 is the number specific to cellulose.

(2) Calculation of Crystallinity

Each sample of the pulps used in the respective Examples and Comparative Examples was measured for an intensity of X-ray diffraction under the following conditions by using "Rigaku RINT 2500VC X-RAY diffractometer" manufactured by Rigaku Corporation, and the crystallinity of cellulose in each pulp sample was calculated from the above calculation formula (1).

Measuring Conditions

X-ray source: Cu/$K_\alpha$-radiation,
Tube voltage: 40 kV,
Tube current: 120 mA,
Measuring range: $2\theta$ = 5 to 45°, and
X-ray scan speed: 10°/min.

A compressed pellet having 320 $mm^2$ of surface area and 1 mm of thickness was used as the sample for measurement.

(3) Measurement of Water Content of Cellulose Raw Material

The water content of the cellulose raw material was measured by using an infrared moisture tester (tradename "FD-610" manufactured by Kett Electric Laboratory). The measurement was conducted at 120 °C, and the point where the mass change with time for 30 s was 0.1% or less was taken as the end point of the measurement. The thus measured water content was converted to the water content (% by mass) based on the remaining mass obtained by subtracting the amount of water from the amount of the cellulose raw material.

(4) Measurement of Median Size of Cellulose Raw Material

The median size of the cellulose powder was measured in a dispersion prepared by dispersing a cellulose powder in ethanol by using a laser diffraction/scattering particle size distribution analyzer (tradename "LA-920" manufactured by Horiba Ltd.). More specifically, prior to the measurement, the cellulose powder was added to ethanol, and the resulting dispersion was subjected to ultrasonic treatment for 1 min to disperse the cellulose powder therein and then subjected to the measurement of the median size.

(5) Content of Cellulose

The pulp used as the cellulose raw material had a high cellulose purity. Therefore, the content of cellulose in a remaining component obtained by removing water from the cellulose raw material was regarded as being 100% by mass.

(6) Calculation of Amount of Propyleneoxy Group Introduced into Hydroxypropyl Cellulose

Hydroxypropyl celluloses (also referred to as "HPC") obtained in the following Examples and Comparative Examples were measured for an average number of propyleneoxy groups introduced thereinto per AGU in a main chain of HPC (also referred to as "degree of substitution with propyleneoxy group") according to the "Method of analyzing hydroxypropyl cellulose" described in the 15th revised edition of the Japanese Pharmacopoeia.

Specifically, an aqueous HPC solution obtained in the respective Examples and Comparative Examples was neutralized with lactic acid such that a pH value thereof was adjusted within the range of from 5 to 6, and then purified through a dialysis membrane (molecular weight cut-off of 1000), and the obtained aqueous solution was purified by freeze drying to obtain a purified HPC. The content of a hydroxypropoxy group [formula weight: ($-OC_3H_6OH$) = 75.09] [b (mol/g)] (%) in the thus obtained purified HPC was calculated from the following calculation formula (2):

$$b\ (\text{mol/g}) = (\text{content of hydroxypropoxy group by gas chromatography } (\%))/\ (75.09 \times 100) \qquad (2).$$

Next, using the obtained value b, the degree of substitution with propyleneoxy group (m) of HPC was calculated from the following calculation formula (3):

$$b = m/(162 + m \times 58.08) \qquad (3)$$

(7) Calculation of Amount of Cationic Group Introduced into Cationized Hydroxypropyl Cellulose

The cationized hydroxypropyl celluloses (also referred to as "C-HPC") obtained in the respective Examples and Comparative Examples were measured for an amount of cationic groups introduced into C-HPC, i.e., a degree of substitution with cationic group of C-HPC, was determined from the measured amount of chlorine obtained by elemental analysis and the value obtained by the same method as the "Method of analyzing hydroxypropyl cellulose" described in the 15th revised edition of the Japanese Pharmacopoeia except that the object to be analyzed was not hydroxypropyl cellulose but C-HPC.

Specifically, an aqueous C-HPC solution obtained in the respective Examples and Comparative Examples was purified through a dialysis membrane (molecular weight cut-off of 1000), and the obtained aqueous solution was purified by freeze drying, to obtain a purified C-HPC. The obtained purified C-HPC was measured for the chlorine content (%) by elemental analysis. Assuming that the number of the cationic groups in the purified C-HPC is nearly equal to the number of the chloride counter ions, the amount of cationic group (a (mol/g)) in unit mass of C-HPC was calculated from the following calculation formula (4):

$$a\ (\mathrm{mol/g}) = (\text{chlorine content (\%) by elemental analysis})/(35.5 \times 100) \qquad (4).$$

Next, using the obtained value a and the degree of substitution with propyleneoxy group (m) obtained in the above (3), the degree of substitution with cationic group (k) of C-HPC was calculated from the following calculation formula (5):

$$a = k/(162 + k \times 151.5 + m \times 58) \qquad (5)$$

(8) Calculation of Reaction Selectivity

The reaction selectivity was calculated from the amount of propyleneoxide charged and the degree of substitution with propyleneoxy group therewith according to the following calculation formula (6):

$$\text{Reaction Selectivity (\%)} = (\text{degree of substitution with propyleneoxy group (m)})/[(\text{amount of propyleneoxide charged (mol)})/(\text{AGU (mol) in main chain}) \times 100] \qquad (6)$$

(9) Measurement of Transmittance

The water-solubility was evaluated as follows. That is, a 2% aqueous solution of a sample was prepared, and measured for a transmittance thereof at 600 nm by using Hitachi spectrophotometer "U-2000A" manufactured by a Hitachi High-Technologies Corp., to evaluate a water-solubility of the sample from the thus measured transmittance.

Production Example 1 (Production of Finely Milled Pulp)

A sheet-form wood pulp (manufactured by Tembec, average degree of polymerization: 1770, crystallinity: 74%, water content: 7.6%) as the cellulose raw material was made into chips by a sheet pelletizer (tradename "SGG-220" manufactured by Horai Co, Ltd.). The resulting pulp chips were dried using a dryer overnight to adjust a water content thereof to 1% by mass or less.

The obtained pulp chips were charged at a feed rate of 7.8 kg/h into a continuous vibration mill (tradename "YAMT-50" manufactured by URAS TECHNO Co., Ltd.) having a total tank volume of 50.5 L (25.25 L x 2 pots) and containing 29 pieces of SUS304 rods (filling rate: 67%) with 30 mmϕ, 800 mm length, and a circular cross-sectional shape. The mixture was decrystallized under conditions of frequency: 60 Hz and total amplitude: 8 mm to obtain finely milled wood pulp chips. At this time, the wall temperature of the mill was 90°C (average degree of polymerization: 1130; crystallinity: 18%; water content: 0.9%).

The thus obtained finely milled wood pulp chips had a median size of 100 μm.

Example 1 (Production of Hydroxypropyl Cellulose)

Into a mortar were transferred 2.89 g of the finely milled wood pulp chips (water content: 0.9%) obtained in Production Example 1, and then 1.87 g of a 22.8% by weight sodium hydroxide aqueous solution (0.6 mol per 1 mol of AGU in cellulose; 60% of a total amount of sodium hydroxide to be added) were added to the pulp chips and mixed therewith at room temperature. Thereafter, the resulting mixture was transferred into a glass container and heated at 50°C for 1 h, and 1.50 g of propyleneoxide (1.435 mol per 1 mol of AGU in cellulose; 70% of a total amount of propyleneoxide to be added) were added into the glass container and reacted with the mixture therein at 50°C for 10 h (step 1; water content: 50% by mass based on the remaining mass obtained by subtracting the amount of water from the amount of the cellulose raw material).

After completion of the reaction, the reaction solution was cooled to room temperature, and 4.50 g of the obtained intermediate reaction product were transferred to a mortar and then 0.48 g of a 42.5% by weight sodium hydroxide aqueous solution (0.4 mol per 1 mol of AGU in cellulose; 40% of the total amount of sodium hydroxide to be added) was added to the intermediate reaction product and mixed therewith. Thereafter, the resulting mixture was transferred into a glass container and heated at 50°C for 1 h, and 0.45 g of propyleneoxide (0.615 mol per 1 mol of AGU in cellulose; 30% of the total amount of propyleneoxide to be added) was added into the glass container and reacted with the mixture therein at 50°C for 10 h, thereby obtaining a crude HPC (step 2; water content: 63% by mass based on the remaining mass obtained by subtracting the amount of water from the amount of the cellulose raw material).

Two grams (2.0 g) of the thus obtained crude HPC were sampled and neutralized with lactic acid (produced by Musashino Chemical Laboratory Ltd.; water content: 10% by mass), and the resulting neutralized product was purified by passing through a dialysis membrane and then freeze-dried to obtain a purified HPC. The thus obtained purified HPC had a degree of substitution with propyleneoxy group of 1.33, a reaction selectivity (based on propyleneoxide) of 65% and a transmittance of 70.5%. The results are shown in Table 1.

Examples 2 to 4 and Comparative Examples 1 to 5

The same procedure as in Example 1 was repeated except that the reaction conditions were changed to those shown in Table 1. Meanwhile, in Comparative Example 1, the step 2 was not conducted. The results are shown in Table 1.

Examples 5 to 11 and Comparative Examples 6 to 14

The same procedure as in Example 1 was repeated except that the total amount of the sodium hydroxide added was varied, and further the reaction conditions were changed to those shown in Table 2. Meanwhile, in Comparative Examples 6 to 9 and 11 to 14, the step 2 was not conducted. The results are shown in Table 2.

TABLE 2

| | Cellulose | Addition of sodium hydroxide | | | Addition of propyleneoxide | | | Degree of substitution with propyleneoxy group | Reaction Selectivity*2 (%) | Transmittance (%) |
|---|---|---|---|---|---|---|---|---|---|---|
| | (Upper: g) (Lower: mol) | Step 1 (mol) (addition rate) | Step 2 (mol) (addition rate) | Total amount added*1 (mol) | Step 1 (mol) (addition rate) | Step 2 (mol) (addition rate) | Total amount added*1 (mol) | | | |
| Example 3 | 4.19 | 0.6 | 0.4 | 1.0 | 1.005 | 1.046 | 2.05 | 1.27 | 62 | 85.4 |
| | 0.026 | 60% | 40% | | 49% | 51% | | | | |
| Comparative Example 1 | 2.04 | 1.0 | - | 1.0 | 2.05 | - | 2.05 | 1.20 | 59 | 66.3 |
| | 0.013 | 100% | - | | 100% | - | | | | |
| Example 5*3 | 4.19 | 0.36 | 0.24 | 0.6 | 1.005 | 1.046 | 2.05 | 1.43 | 70 | 13.8 |
| | 0.026 | 60% | 40% | | 49% | 51% | | | | |
| Comparative Example 6 | 2.04 | 0.6 | - | 0.6 | 2.05 | - | 2.05 | 1.44 | 70 | 4.14 |
| | 0.013 | 100% | - | | 100% | - | | | | |
| Example 6*3 | 4.19 | 0.18 | 0.12 | 0.3 | 1.005 | 1.046 | 2.05 | 1.48 | 72 | 3.80 |
| | 0.026 | 60% | 40% | | 49% | 51% | | | | |
| Comparative Example 7 | 2.04 | 0.3 | - | 0.3 | 2.05 | - | 2.05 | 1.47 | 72 | 0.85 |
| | 0.013 | 100% | - | | 100% | - | | | | |
| Example 7 | 4.19 | 0.48 | 0.32 | 0.8 | 1.005 | 1.046 | 2.05 | 1.38 | 67 | 52.1 |
| | 0.026 | 60% | 40% | | 49% | 51% | | | | |
| Comparative Example 8 | 2.04 | 0.8 | - | 0.8 | 2.05 | - | 2.05 | 1.33 | 65 | 39.2 |
| | 0.013 | 100% | - | | 100% | - | | | | |
| Example 8 | 4.19 | 0.84 | 0.56 | 1.4 | 1.005 | 1.046 | 2.05 | 1.14 | 55 | 83.7 |
| | 0.026 | 60% | 40% | | 49% | 51% | | | | |
| Comparative Example 9 | 2.04 | 1.4 | - | 1.4 | 2.05 | - | 2.05 | 0.95 | 46 | 70.2 |
| | 0.013 | 100% | - | | 100% | - | | | | |
| Comparative Example 10 | 4.19 | 1.14 | 0.76 | 1.9 | 1.005 | 1.046 | 2.05 | 1.02 | 50 | 86.7 |
| | 0.026 | 60% | 40% | | 49% | 51% | | | | |

(continued)

| | Cellulose | Addition of sodium hydroxide | | | Addition of propyleneoxide | | | Degree of substitution with propyleneoxy group | Reaction Selectivity*2 (%) | Transmittance (%) |
|---|---|---|---|---|---|---|---|---|---|---|
| | (Upper: g) (Lower: mol) | Step 1 (mol) (addition rate) | Step 2 (mol) (addition rate) | Total amount added*1 (mol) | Step 1 (mol) (addition rate) | Step 2 (mol) (addition rate) | Total amount added*1 (mol) | | | |
| Comparative Example 11 | 2.04 | 1.9 | - | 1.9 | 2.05 | - | 2.05 | 0.83 | 41 | 74.2 |
| | 0.013 | 100% | - | | 100% | - | | | | |
| Example 9 | 8.54 | 0.6 | 0.4 | 1.0 | 0.49 | 0.51 | 1.0 | 0.66 | 66 | 9.42 |
| | 0.053 | 60% | 40% | | 49% | 51% | | | | |
| Comparative Example 12 | 4.19 | 1.0 | - | 1.0 | 1.0 | - | 1.0 | 0.60 | 60 | 4.49 |
| | 0.026 | 100% | - | | 100% | - | | | | |
| Example 10 | 3.40 | 0.6 | 0.4 | 1.0 | 1.225 | 1.275 | 2.5 | 1.66 | 66 | 93.8 |
| | 0.021 | 60% | 40% | | 49% | 51% | | | | |
| Comparative Example 13 | 1.67 | 1.0 | - | 1.0 | 2.5 | - | 2.5 | 1.50 | 60 | 74.6 |
| | 0.010 | 100% | - | | 100% | - | | | | |
| Example 11 | 2.85 | 0.6 | 0.4 | 1.0 | 1.47 | 1.53 | 3.0 | 1.99 | 66 | 96.9 |
| | 0.018 | 60% | 40% | | 49% | 51% | | | | |
| Comparative Example 14 | 1.40 | 1.0 | - | 1.0 | 3.0 | - | 3.0 | 1.78 | 59 | 82.6 |
| | 0.009 | 100% | - | | 100% | - | | | | |

Note *1: Number of moles per 1 mol of anhydroglucose unit in cellulose
*2: Reaction Selectivity (%) based on propyleneoxide
*3: Examples not falling within the scope of the invention as claimed

| | | | | | | | | | | |
|---|---|---|---|---|---|---|---|---|---|---|
| Comparative Example 10 | 4.19 | 1.14 | 0.76 | 1.9 | 1.005 | 1.046 | 2.05 | 1.02 | 50 | 86.7 |
| | 0.026 | 60% | 40% | | 49% | 51% | | | | |
| Comparative Example 11 | 2.04 | 1.9 | - | 1.9 | 2.05 | - | 2.05 | 0.83 | 41 | 74.2 |
| | 0.013 | 100% | - | | 100% | - | | | | |
| Example 9 | 8.54 | 0.6 | 0.4 | 1.0 | 0.49 | 0.51 | 1.0 | 0.66 | 66 | 9.42 |
| | 0.053 | 60% | 40% | | 49% | 51% | | | | |
| Comparative Example 12 | 4.19 | 1.0 | - | 1.0 | 1.0 | - | 1.0 | 0.60 | 60 | 4.49 |
| | 0.026 | 100% | - | | 100% | - | | | | |
| Example 10 | 3.40 | 0.6 | 0.4 | 1.0 | 1.225 | 1.275 | 2.5 | 1.66 | 66 | 93.8 |
| | 0.021 | 60% | 40% | | 49% | 51% | | | | |
| Comparative Example 13 | 1.67 | 1.0 | - | 1.0 | 2.5 | - | 2.5 | 1.50 | 60 | 74.6 |
| | 0.010 | 100% | - | | 100% | - | | | | |
| Example 11 | 2.85 | 0.6 | 0.4 | 1.0 | 1.47 | 1.53 | 3.0 | 1.99 | 66 | 96.9 |
| | 0.018 | 60% | 40% | | 49% | 51% | | | | |
| Comparative Example 14 | 1.40 | 1.0 | - | 1.0 | 3.0 | - | 3.0 | 1.78 | 59 | 82.6 |
| | 0.009 | 100% | - | | 100% | - | | | | |
| Note *1: Number of moles per 1 mol of anhydroglucose unit in cellulose<br>*2: Reaction Selectivity (%) based on propyleneoxide | | | | | | | | | | |

From Tables 1 and 2, it was confirmed that according to the process of the present invention, the hydroxyalkyl cellulose having an excellent water-solubility was produced in an efficient manner while maintaining a high reaction selectivity.

Example 12

Four grams (4.00 g) of the crude HPC obtained in Example 1 were transferred into a mortar, and then 1.17 g of a 59.2% by weight 3-chloro-2-hydroxypropyl trimethyl ammonium chloride aqueous solution (0.4 mol per 1 mol of AGU in cellulose) were added to the crude HPC and mixed therewith at room temperature. Thereafter, the resulting mixture was transferred into a glass container and reacted at 50°C for 1 h, thereby obtaining a crude cationized hydroxypropyl cellulose (also referred to as crude cationized HPC). The water content in the cationization step was 97% by mass based on the remaining mass obtained by subtracting the amount of water from the amount of the cellulose raw material.

Two grams (2.0 g) of the thus obtained crude cationized HPC were sampled and neutralized with lactic acid (produced by Musashino Chemical Laboratory Ltd.; water content: 10%), and the resulting neutralized product was purified by passing through a dialysis membrane and then freeze-dried to obtain a purified cationized HPC. The thus obtained purified cationized HPC had a degree of substitution with cationic group of 0.166, a reaction selectivity (based on 3-chloro-2-hydroxypropyl trimethyl ammonium chloride) of 42% and a transmittance of 94.7%. The results are shown in Table 3.

Example 13 and Comparative Example 15

The same procedure as in Example 12 was repeated except for using the crude HPCs obtained in Example 2 and Comparative Example 1, respectively. The results are shown in Table 3.

TABLE 3

| | Hydroxypropyl cellulose | Degree of substitution with cationic group | Reaction Selectivity*1 (%) | Transmittance (%) |
|---|---|---|---|---|
| Example 12 | Example 1 | 0.166 | 42 | 94.7 |
| Example 13 | Example 2 | 0.174 | 44 | 96.9 |
| Comparative Example 15 | Comparative Example 1 | 0.160 | 39 | 74.7 |
| Note *1: Reaction Selectivity (%) based on cation | | | | |

From Table 3, it was confirmed that according to the process of the present invention, the cationized hydroxyalkyl cellulose having an excellent water-solubility was produced in an efficient manner while maintaining a high reaction selectivity.

Industrial Applicability

In the process for producing a hydroxyalkyl cellulose according to the present invention, it is possible to produce a hydroxyalkyl cellulose having an excellent water-solubility in an efficient manner while maintaining a high reaction selectivity. Further, according to the present invention, a cationized hydroxyalkyl cellulose can be produced from the resulting hydroxyalkyl cellulose in an efficient manner.

## Claims

1. A process for producing a hydroxyalkyl cellulose by adding a basic compound and an alkyleneoxide to a cellulose to conduct a reaction therebetween in which the basic compound is added in a total amount of not less than 0.7 mol and not more than 1.5 mol per 1 mol of an anhydroglucose unit in the cellulose, and the alkyleneoxide is added in a total amount of not less than 1.0 mol and not more than 3.0 mol per 1 mol of an anhydroglucose unit in the cellulose, said process comprising the following steps 1 and 2:

    Step 1: adding the basic compound in an amount of not less than 50% and not more than 95% of the total amount of the basic compound to be added during the process, and then adding the alkyleneoxide in an amount of not less than 30% and not more than 80% of the total amount of the alkyleneoxide to be added during the process to react the compounds with the cellulose, thereby obtaining a reaction mixture; and
    Step 2: adding a remaining amount of the basic compound not added in the step 1 and a remaining amount of the alkyleneoxide not added in the step 1 to the reaction mixture obtained in the step 1 to conduct a reaction therebetween.

2. The process for producing a hydroxyalkyl cellulose according to claim 1, wherein the basic compound is added in a total amount of not less than 0.7 mol and not more than 1.2 mol per 1 mol of an anhydroglucose unit in the cellulose.

3. The process for producing a hydroxyalkyl cellulose according to any one of claims 1-2, wherein a content of water upon the reaction of each of the steps 1 and 2 is not less than 20% by mass and not more than 90% by mass on the basis of a remaining mass obtained by subtracting an amount of water from an amount of the cellulose raw material.

4. The process for producing a hydroxyalkyl cellulose according to any one of claims 1 to 3, wherein the cellulose raw material has a crystallinity of not less than 10% and not more than 50%.

5. The process for producing a hydroxyalkyl cellulose according to any one of claims 1 to 4, wherein the basic compound is an alkali metal hydroxide.

6. The process for producing a hydroxyalkyl cellulose according to any one of claims 1 to 5, wherein the alkyleneoxide is ethyleneoxide or propyleneoxide.

**7.** The process for producing a hydroxyalkyl cellulose according to any one of claims 1 to 6, wherein the basic compound is used in the form of an aqueous solution in the steps 1 and 2.

**8.** The process for producing a hydroxyalkyl cellulose according to any one of claims 1 to 7, wherein the basic compound is added in the step 1 and the resulting mixture is subsequently aged.

**9.** The process for producing a hydroxyalkyl cellulose according to any one of claims 1 to 8, wherein the basic compound is added in the step 2 and the resulting mixture is subsequently aged.

**10.** The process for producing a hydroxyalkyl cellulose according to any one of claim 8 or claim 9, wherein a temperature used upon the aging is 35°C or higher and 90°C or lower.

**11.** The process for producing a hydroxyalkyl cellulose according to any one of claims 8 to 10, wherein a time of the aging is 0.1 h or longer and 24 h or shorter.

**12.** A process for producing a cationized hydroxyalkyl cellulose comprising the steps of producing a hydroxyalkyl cellulose by the process as claimed in any one of 5 claims 1 to 11, and a step of reacting the hydroxyalkyl cellulose with a cationizing agent represented by the following general formula (1) or (2):

General formula (1):

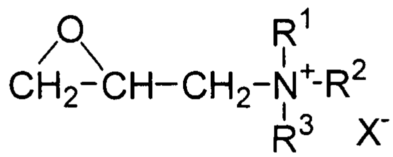

General formula (2):

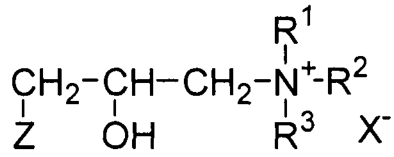

wherein $R^1$ to $R^3$ are each independently a linear or branched hydrocarbon group having 1 to 4 carbon atoms; and X and Z represent the same halogen atom or 10 different halogen atoms.

**13.** The process for producing a hydroxyalkyl cellulose according to any one of claims 1 to 11, wherein the basic compound is added in a total amount of 0.7 mol or more and 1.4 mol or less per 1 mol of an anhydroglucose unit in the cellulose.

**14.** The process for producing a hydroxyalkyl cellulose according to any one of claims 1 to 11, wherein the basic compound is added in a total amount of 0.7 mol or more and 1.1 mol or less per 1 mol of an anhydroglucose unit in the cellulose.

## Patentansprüche

**1.** Verfahren zur Erzeugung einer Hydroxyalkylcellulose durch Zugabe einer basischen Verbindung und eines Alkylenoxids zu einer Cellulose, zur Durchführung einer Reaktion zwischen diesen, worin die basische Verbindung in einer Gesamtmenge von nicht weniger als 0,7 Mol und nicht mehr als 1,5 Mol pro 1 Mol einer Anhydroglucose-Einheit in der Cellulose zugegeben wird und das Alkylenoxid in einer Gesamtmenge von nicht weniger als 1,0 Mol und nicht mehr als 3,0 Mol pro 1 Mol einer Anhydroglycose-Einheit in der Cellulose zugegeben wird, wobei das Verfahren die folgenden Schritte 1 und 2 enthält:

Schritt 1: Zugabe der basischen Verbindung in einer Menge von nicht weniger als 50% und nicht mehr als 95% der Gesamtmenge der während des Verfahrens zuzugebenden basischen Verbindung und anschließende Zugabe des Alkylenoxides in einer Menge von nicht weniger als 30% und nicht mehr als 80% der Gesamtmenge des während des Verfahrens zuzugebenden Alkylenoxides, zur Reaktion der Verbindungen mit der Cellulose, unter Erhalt einer Reaktionsmischung, und

Schritt 2: Zugabe einer verbleibenden Menge der basischen Verbindung, die im Schritt 1 nicht zugegeben ist, und einer verbleibenden Menge des Alkylenoxids, das im Schritt 1 nicht zugegeben ist, zu der Reaktionsmischung, erhalten im Schritt 1, zum Durchführen einer Reaktion zwischen diesen.

**2.** Verfahren zur Erzeugung einer Hydroxyalkylcellulose nach Anspruch 1, worin die basische Verbindung in einer

Gesamtmenge von nicht weniger als 0,7 Mol und nicht mehr als 1,2 Mol pro 1 Mol einer Anhydrogluclose-Einheit in der Cellulose zugegeben wird.

**3.** Verfahren zur Erzeugung einer Hydroxyalkylcellulose nach einem der Ansprüche 1 bis 2, worin ein Gehalt von Wasser bei der Reaktion von jedem Schritt 1 und 2 nicht weniger als 20 Massen-% und nicht mehr als 90 Massen-% ist, auf der Basis der verbleibenden Masse, erhalten durch Subtrahieren einer Menge an Wasser von einer Menge des Celluloseausgangsmaterials.

**4.** Verfahren zur Erzeugung einer Hydroxyalkylcellulose nach einem der Ansprüche 1 bis 3, worin das Celluloseausgangsmaterial eine Kristallinität von nicht weniger als 10% und nicht mehr als 50% hat.

**5.** Verfahren zur Erzeugung einer Hydroxyalkylcellulose nach einem der Ansprüche 1 bis 4, worin die basische Verbindung ein Alkalimetallhydroxid ist.

**6.** Verfahren zur Erzeugung einer Hydroxyalkylcellulose nach einem der Ansprüche 1 bis 5, worin das Alkylenoxid Ethylenoxid oder Propylenoxid ist.

**7.** Verfahren zur Erzeugung einer Hydroxyalkylcellulose nach einem der Ansprüche 1 bis 6, worin die basische Verbindung in der Form einer wässrigen Lösung in den Schritten 1 und 2 verwendet wird.

**8.** Verfahren zur Erzeugung einer Hydroxyalkylcellulose nach einem der Ansprüche 1 bis 7, worin die basische Verbindung im Schritt 1 zugegeben wird und die resultierende Mischung anschließend gealtert wird.

**9.** Verfahren zur Erzeugung einer Hydroxyalkylcellulose nach einem der Ansprüche 1 bis 8, worin die basische Verbindung im Schritt 2 zugegeben und die resultierende Mischung anschließend gealtert wird.

**10.** Verfahren zur Erzeugung einer Hydroxyalkylcellulose nach einem der Ansprüche 8 oder 9, worin eine Temperatur, die beim Altern verwendet wird, 35°C oder mehr und 90°C oder weniger ist.

**11.** Verfahren zur Erzeugung einer Hydroxyalkylcellulose nach einem der Ansprüche 8 bis 10, worin eine Alterungszeit 0,1 h oder mehr und 24 h oder weniger ist.

**12.** Verfahren zur Erzeugung einer kationisierten Hydroxyalkylcellulose, enthaltend die Schritte der Erzeugung einer Hydroxyalkylcellulose durch das Verfahren nach einem der Ansprüche 1 bis 11 und einen Schritt der Reaktion der Hydroxyalkylcellulose mit einem Kationisiermittel, dargestellt durch die folgende allgemeine Formel (1) oder (2):

Allgemeine Formel (1):

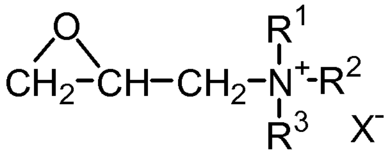

Allgemeine Formel (2):

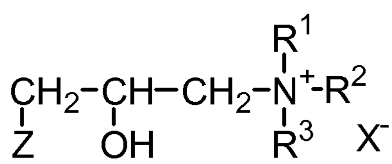

worin $R^1$ bis $R^3$ jeweils unabhängig eine lineare oder verzweigte Kohlenwasserstoffgruppe mit 1 bis 4 Kohlenstoffatomen und X und Z gleiche oder unterschiedliche Halogenatome sind.

**13.** Verfahren zur Erzeugung einer Hydroxyalkylcellulose nach einem der Ansprüche 1 bis 11, worin die basische Verbindung in einer Gesamtmenge von 0,7 Mol oder mehr und 1,4 Mol oder weniger pro 1 Mol einer Anhydroglucose-Einheit in der Cellulose zugegeben wird.

**14.** Verfahren zur Erzeugung einer Hydroxyalkylcellulose nach einem der Ansprüche 1 bis 11, worin die basische Verbindung in einer Gesamtmenge von 0,7 Mol oder mehr und 1,1 Mol oder weniger pro 1 Mol einer Anhydrogluclose-Einheit in der Cellulose zugegeben wird.

## Revendications

1. Procédé de production d'une hydroxyalkyl cellulose par l'ajout d'un composé basique et d'un oxyde d'alkylène à une cellulose pour mener une réaction entre eux dans laquelle le composé basique est ajouté en une quantité totale de pas moins de 0,7 mole et d'au plus 1,5 mole pour 1 mole d'un motif anhydroglucose dans la cellulose, et l'oxyde d'alkylène est ajouté en une quantité totale de pas moins de 1,0 mole et d'au plus 3,0 moles pour 1 mole d'un motif anhydroglucose dans la cellulose, ledit procédé comprenant les étapes 1 et 2 suivantes :

   Étape 1 : ajouter le composé basique en une quantité de pas moins de 50 % et d'au plus 95 % de la quantité totale du composé basique à ajouter pendant le procédé, et ensuite ajouter l'oxyde d'alkylène en une quantité de pas moins de 30 % et d'au plus 80 % de la quantité totale de l'oxyde d'alkylène à ajouter pendant le procédé pour faire réagir les composés avec la cellulose, pour ainsi obtenir un mélange réactionnel ; et
   Étape 2 : ajouter une quantité restante du composé basique non ajoutée dans l'étape 1 et une quantité restante de l'oxyde d'alkylène non ajoutée dans l'étape 1 au mélange réactionnel obtenu dans l'étape 1 pour mener une réaction entre eux.

2. Procédé de production d'une hydroxyalkyl cellulose selon la revendication 1, dans lequel le composé basique est ajouté en une quantité totale de pas moins de 0,7 mole et d'au plus 1,2 mole pour 1 mole d'un motif anhydroglucose dans la cellulose.

3. Procédé de production d'une hydroxyalkyl cellulose selon l'une quelconque des revendications 1 et 2, dans lequel une teneur en eau lors de la réaction de chacune des étapes 1 et 2 n'est pas inférieure à 20 % en masse et pas supérieure à 90 % en masse sur la base d'une masse restante obtenue par la soustraction d'une quantité d'eau d'une quantité de la matière première cellulosique.

4. Procédé de production d'une hydroxyalkyl cellulose selon l'une quelconque des revendications 1 à 3, dans lequel la matière première cellulosique présente une cristallinité de pas moins de 10 % et d'au plus 50 %.

5. Procédé de production d'une hydroxyalkyl cellulose selon l'une quelconque des revendications 1 à 4, dans lequel le composé basique est un hydroxyde de métal alcalin.

6. Procédé de production d'une hydroxyalkyl cellulose selon l'une quelconque des revendications 1 à 5, dans lequel l'oxyde d'alkylène est l'oxyde d'éthylène ou l'oxyde de propylène.

7. Procédé de production d'une hydroxyalkyl cellulose selon l'une quelconque des revendications 1 à 6, dans lequel le composé basique est utilisé sous la forme d'une solution aqueuse dans les étapes 1 et 2.

8. Procédé de production d'une hydroxyalkyl cellulose selon l'une quelconque des revendications 1 à 7, dans lequel le composé basique est ajouté dans l'étape 1 et le mélange résultant est ensuite soumis à un vieillissement.

9. Procédé de production d'une hydroxyalkyl cellulose selon l'une quelconque des revendications 1 à 8, dans lequel le composé basique est ajouté dans l'étape 2 et le mélange résultant est ensuite soumis à un vieillissement.

10. Procédé de production d'une hydroxyalkyl cellulose selon l'une quelconque de la revendication 8 ou la revendication 9, dans lequel une température utilisée lors du vieillissement est de 35 °C ou plus et de 90 °C ou moins.

11. Procédé de production d'une hydroxyalkyl cellulose selon l'une quelconque des revendications 8 à 10, dans lequel la durée du vieillissement est de 0,1 heure ou plus et de 24 heures ou moins.

12. Procédé de production d'une hydroxyalkyl cellulose cationisée comprenant les étapes de production d'une hydroxyalkyl cellulose par le procédé selon l'une quelconque des revendications 1 à 11, et une étape de réaction de l'hydroxyalkyl cellulose avec un agent de cationisation représenté par la formule générale (1) ou (2) suivante :

Formule générale (1) :

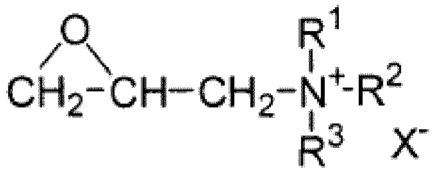

Formule générale (2) :

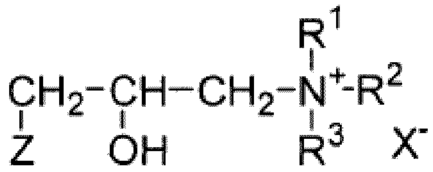

dans lesquelles $R^1$ à $R^3$ sont chacun indépendamment un groupe hydrocarboné linéaire ou ramifié contenant 1 à 4 atomes de carbone ; et X et Z représentent le même atome d'halogène ou des atomes d'halogène différents.

**13.** Procédé de production d'une hydroxyalkyl cellulose selon l'une quelconque des revendications 1 à 11, dans lequel le composé basique est ajouté en une quantité totale de 0,7 mole ou plus et de 1,4 mole ou moins pour 1 mole d'un motif anhydroglucose dans la cellulose.

**14.** Procédé de production d'une hydroxyalkyl cellulose selon l'une quelconque des revendications 1 à 11, dans lequel le composé basique est ajouté en une quantité totale de 0,7 mole ou plus et de 1,1 mole ou moins pour 1 mole d'un motif anhydroglucose dans la cellulose.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 384800 B
- JP 2002114801 A
- JP 2009143997 A
- JP 1502675 A
- JP 2009522394 A
- EP 1589035 A1
- US 4084060 A
- EP 1279680 A2
- WO 2006062268 A1
- JP 2000186101 A


### Non-patent literature cited in the description


- *Cellulose,* 2010, vol. 17, 437-448